# EUROPEAN PATENT SPECIFICATION

(11) **EP 4 573 143 B1**
(45) Date of publication and mention of the grant of the patent: **24.06.2026**
(21) Application number: 23768445.1
(22) Date of filing: 21.08.2023
(51) Int. Cl.: C08G 59/50, C08G 59/54

(54) **COATING COMPOSITIONS**
BESCHICHTUNGSZUSAMMENSETZUNGEN
COMPOSITIONS DE REVÊTEMENT

(30) Priority: 19.08.2022 US 202263371934 P
(43) Date of publication of application: 25.06.2025
(73) Proprietor: PPG Industries Ohio Inc., Cleveland, OH 44111 (US)
(72) Inventor: FORTMAN, David Joseph, Pittsburgh, Pennsylvania 15206 (US); POLLUM, Jr., Marvin Michael, Pittsburgh, Pennsylvania 15212 (US); STITT, Erik M., Gibsonia, Pennsylvania 15044 (US); BLACKFORD, Timothy David, North Royalton, Ohio 44133 (US)
(74) Representative: f & e patent
(86) International application number: PCT/US2023/072551
(87) International publication number: WO 2024/040260

(56) References cited:
- WO-A1-2021/040867
- US-A1- 2009 048 370
- US-A1- 2012 129 980

## Description

### CROSS-REFERENCE TO RELATED APPLICATIONS

This application claims priority to U.S. Provisional Application No. 63/371,934 filed on August 9, 2022 "Coating Compositions."

### FIELD

The present disclosure relates to compositions and coatings formed therefrom.

### BACKGROUND

Coating compositions, including adhesives, are utilized in a wide variety of applications to treat a variety of substrates or to bond together two or more substrate materials. WO 2021/040867 A1 relates to compositions, for example sealant, adhesive, and coating compositions, and to sealants, adhesives, and coatings. The composition may be applied to cleaned or uncleaned (i.e., including oily or oiled) substrate surfaces. In table 3, compositions XI-XXI disclose compositions comprising an epoxy resin (Epon 863), core-shell styrene-butadiene rubber particles (Kane Ace MX 135), a flexibilizing amine (Jeffamine EDR-148), an aliphatic amin (Ancamine 1922A) and an accelerator.

### SUMMARY

The present disclosure is directed to compositions comprising: a first component comprising an epoxy-containing compound; a second component comprising an aliphatic amine, an amidoamine, and a flexibilizing amine; an accelerator; and elastomeric particles.

The present disclosure also is directed to substrates comprising a coating formed from any of the compositions disclosed herein on a portion of a surface of the substrate.

Also disclosed are articles, comprising: one of the substrates disclosed herein; and a second substrate; wherein any of the coatings disclosed herein is positioned between the substrate and the second substrate.

Also disclosed are methods of coating a substrate comprising contacting a portion of a surface of the substrate with any of the compositions disclosed herein.

Also disclosed are methods of forming an article, comprising extruding any of the compositions disclosed herein.

Also disclosed are uses of one of the coating compositions disclosed herein for coating a surface of a substrate, wherein the coating comprises (a) a lap shear strength of at least 12 MPa measured according to ASTM D1002-10 using HDG substrate of 0.8 mm thickness dip coated with a 10% by weight solution of Multidraw KTL N 16 Oil in heptane measured using an INSTRON 5567 machine in tensile mode with a pull rate of 10 mm per minute, and (b) a wedge impact peel resistance at -40°C of at least 2.0 N/mm tested according to ISO 11343 Dynamic Resistance to Cleavage testing using HDG substrate of 0.8 mm thickness dip coated with a 10% by weight solution of Multidraw KTL N 16 Oil in heptane measured using an INSTRON
CEAST 9350 drop tower model at an impact speed of 2 m/sec, with samples being conditioned at -40°C for at least 30 minutes prior to testing.

### DETAILED DESCRIPTION

For purposes of this detailed description, it is to be understood that the disclosure may assume alternative variations and step sequences, except where expressly specified to the contrary. Moreover, other than in any operating examples, or where otherwise indicated, all numbers expressing, for example, quantities of ingredients used in the specification and claims, are to be understood as being modified in all instances by the term "about". Accordingly, unless indicated to the contrary, the numerical parameters set forth in the following specification and attached claims are approximations that may vary depending upon the desired properties to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard variation found in their respective testing measurements.

Also, any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

As used herein, "including," "containing," and like terms are understood in the context of this application to be synonymous with "comprising" and are therefore open-ended and do not exclude the presence of additional undescribed or unrecited elements, materials, ingredients, or method steps. As used herein, open-ended terms include closed terms such as consisting essentially of and consisting of.

As used herein, "consisting of" is understood in the context of this application to exclude the presence of any unspecified element, ingredient, or method step.

As used herein, "consisting essentially of" is understood in the context of this application to include the specified elements, materials, ingredients, or method steps "and those that do not materially affect the basic and novel characteristic(s)" of what is being described.

In this application, the use of the singular includes the plural and plural encompasses singular, unless specifically stated otherwise. For example, although reference is made herein to "an" epoxy-containing compound and "an" accelerator, a combination (i.e., a plurality) of these components may be used.

In addition, in this application, the use of "or" means "and/or" unless specifically stated otherwise, even though "and/or" may be explicitly used in certain instances.

As used herein, the terms "on," "onto," "applied on," "applied onto," "formed on," "deposited on," "deposited onto," "injected on," "injected onto" and the like mean formed, overlaid, deposited, or provided on, but not necessarily in contact with, a substrate surface. For example, a composition "applied onto" a substrate surface does not preclude the presence of one or more other intervening coating layers or films of the same or different composition located between the composition and the substrate surface.

As used herein, a "coating composition" refers to a composition, e.g., a solution, mixture, or a dispersion, that, is capable of producing a coating on a portion of a substrate surface. "Coating" as used herein includes films, layers and the like.

As used herein, the term "adhesive" means a coating producing a load-bearing joint.

As used herein, the term "structural adhesive composition" means a composition that forms a structural adhesive when cured.

As used herein, the term "structural adhesive" means an adhesive producing a load-bearing joint having a lap shear strength of at least 10.0 MPa, measured according to ASTM D1002-10 using hot-dip galvanized (HDG) steel substrate of 0.8 mm thickness measured using an INSTRON 5567 machine in tensile mode with a pull rate of 10 mm per minute.

As used herein, the term "pottant" refers to an encapsulant.

As used herein, the term "gap filler" refers to a coating that fills a gap.

As used herein, the term "pre-preg" refers to a composition pre-impregnating reinforcement fibers prior to cure.

As used herein, the term "liquid shim" refers to a coating that eliminates gaps between substrate surfaces.

As further defined herein, ambient conditions generally refer to room temperature (e.g., 23°C) and humidity conditions or temperature and humidity conditions that are typically found in the area in which the composition is applied to a substrate, e.g., at 10°C to 40°C and 5% to 80% relative humidity.

As used herein, the term "two-component" or "2K" refers to a composition in which a portion of the reactive components readily associate to form an interaction or react to form a bond (physically or chemically), i.e., cure, without activation from an external energy source, such as at ambient or slightly thermal conditions, when mixed. One of skill in the art understands that the two components of the composition are stored separately from each other and mixed just prior to application of the composition. Two-component compositions may optionally be heated or baked, as described below.

As used herein, the term "cure" or "curing", means that the components that form the composition are crosslinked (i.e., interact and/or react) to form a coating or a bond. In the case of a 2K composition, the composition begins to cure when the components of the composition are mixed resulting in the reaction of the reactive functional groups of the components of the composition.

As used herein, "monoamine" refers to an organic compound having one amino functional group.

As used herein, "diamine" refers to an organic compound having two amino functional groups.

As used herein, "polyamine" refers to an organic compound having more than two amino functional groups.

As used herein, "amino functional group" refers to a functional group comprising a nitrogen atom attached by a single bond to a hydrogen atom(s), an alkyl group(s), and/or an aryl group(s).

As used herein, "epoxide functional group" refers to a functional group comprising a cyclic ether with a three-atom ring.

As used herein, "amine hydrogen" refers to the number of active hydrogens directly bonded to the nitrogen atom of an amine- or another nitrogen-containing functional group. "Active hydrogens" refer to hydrogens that can be displaced when the amine- or nitrogen-containing functional group reacts as a nucleophile with an appropriate clectrophile and can be determined, for example, by the Zerewitinoff test. Active hydrogens on all accelerators and curing agents (e.g., diamines and/or polyamines) were included in the amine hydrogens of the compositions of the present disclosure.

As used herein, the "epoxide equivalent weight" refers to the weight of material in grams containing one stoichiometric equivalent of epoxy functional groups. The epoxide equivalent weight may be determined, for example, by titration of a sample using a Metrohm 808 or 888 Titrando, using a sample 0.06 g per 100 g/eq of predicted epoxy equivalent weight and dissolving the sample in 20 mL of methylene chloride or tetrahydrofuran and then adding 40 mL glacial acetic acid and one gram of tetraethylammonium bromide before titration with 0.1 N perchloric acid in glacial acetic acid.

As used herein, "Mw" refers to the weight average molecular weight, for example the theoretical value as determined by Gel Permeation Chromatography using Waters 2695 separation module with a Waters 410 differential refractometer (RI detector) and polystyrene standards, tetrahydrofuran (THF) used as the eluent at a flow rate of 1 ml min⁻¹, and two PL Gel Mixed C columns used for separation.

As used herein, "polymer" refers to a molecule comprising chemically bonded repeating or monomeric units and may include oligomers, homopolymers, and copolymers.

As used herein, "small molecule" refers to a molecule that comprises discrete chemical structures, has a molecular weight of less than 1200 g/mol and that is not a polymer (i.e., is not composed of repeating monomer units). The molecular weight of a small molecule may be determined by mass spectrometry. Appropriate mass spectrometry methods for various types of small molecules are available in many references, such as Mass Spectrometry: A Textbook (3rd Edition, 2018, edited by Jürgen Gross).

As used herein, the term "reactive diluent" refers to a molecule or a compound that is used to lower the viscosity of a formulation and that has at least one functional group capable of reacting with a functional group(s) on molecules or compounds in a composition.

As used herein, the term "plasticizer" refers to a molecule or a compound that does not have a functional group capable of reacting with a functional group(s) on molecules or compounds in a composition and that is added to the composition to decrease viscosity, decrease glass transition temperature (Tg), and impart flexibility.

As used herein, the term "accelerator" means a substance that increases the rate or decreases the activation energy of a chemical reaction in comparison to the same reaction in the absence of the accelerator. An accelerator may be either a "catalyst," that is, without itself undergoing any permanent chemical change, or may be reactive, that is, capable of chemical reactions and includes any level of reaction from partial to complete reaction of a reactant.

As used herein, unless indicated otherwise, the term "substantially free" means that a particular material is not purposefully added to a mixture or composition and is present only as an impurity in a trace amount of less than 5 percent by weight based on a total weight of the mixture or composition.

As used herein, unless indicated otherwise, the term "essentially free" means that a particular material is not purposefully added to a mixture or composition and is present only as an impurity in a trace amount of less than 2 percent by weight based on a total weight of the mixture or composition.

As used herein, unless indicated otherwise, the term "completely free" means that a mixture or composition does not comprise a particular material, i.e., the mixture or composition comprises 0% by weight of such material.

Disclosed herein is a composition comprising, or consisting essentially of, or consisting of: a first component comprising, or consisting essentially of, or consisting of, an epoxy-containing compound; a second component comprising, or consisting essentially of, or consisting of, an aliphatic amine, an amidoamine, and a flexibilizing amine; an accelerator; and elastomeric particles.

### First Component

As discussed above, the first component of the composition may comprise an epoxy-containing compound.

In some cases, the epoxy-containing compound may comprise an aromatic epoxy. As used herein, the term "aromatic epoxy" refers to an epoxy-containing compound comprising at least one aromatic group.

Useful aromatic epoxies that can be used include polyepoxides (having an epoxy functionality greater than 1), epoxy adducts, or combinations thereof. Suitable polyepoxides include polyglycidyl ethers of Bisphenol A, such as Epon^{®} 828 and 1001 epoxy resins, and Bisphenol F polycpoxides, such as Epon^{®} 862, which are commercially available from Hexion Specialty Chemicals, Inc. Other non-limiting aromatic epoxies include bisphenol S diglycidyl ether, epoxidized Bisphenol A novolacs, epoxidized phenolic novolacs, epoxidized cresylic novolac, triglycidyl p-aminophenol, triglycidyl p-aminophenol bismaleimide, tetraglycidyl 4,4'-diaminodiphenylmethane, tetraglycidyl *m*-xylylenediamine, and tetraglycidyl 4,4'-diaminodiphenylsulphone.

The aromatic epoxy may comprise a monoepoxide. Suitable aromatic monoepoxies include glycidyl ethers of phenols, such as phenyl glycidyl ether or cresyl glycidyl ether. The epoxy-containing compound may comprise a combination of any of the aromatic polyepoxides described above and any of the aromatic monoepoxides described above.

In some cases, the epoxy-containing compound may comprise an aliphatic epoxy. As used herein, the term "aliphatic epoxy" refers to epoxy-containing compounds free-from any aromatic groups. Useful aliphatic epoxies include polyglycidyl ethers of polyhydric alcohols, polyglycidyl esters of polycarboxylic acids, polyepoxides that are derived from the epoxidation of an olefinically unsaturated alicyclic compound, or polyepoxides containing oxyalkylene groups in the epoxy molecule. The epoxy-containing compound may also comprise an epoxy-containing acrylic, such as copolymers comprising glycidyl methacrylate. Non-limiting examples of aliphatic epoxies include ethylene glycol diglycidyl ether, butanediol diglycidyl ether, neopentyl glycol diglycidyl ether, hexanediol diglycidyl ether, isosorbide diglycidyl ether, trimethylolpropane triglycidyl ether, trimethylolethane diglycidyl ether, pentaerythritol polyglycidyl ether, sorbitol polyglycidyl ether, and triglycidyl isocyanurate.

The aliphatic epoxy may comprise a monoepoxide. Suitable aliphatic monoepoxides that may be used include glycidol, monoglycidyl ethers of aliphatic alcohols such as n-butyl glycidyl ether, isopropyl glycidyl ether, glycidyl versatate, for example, CARDURA E available from Shell Chemical Co., glycidyl ethers of fatty alcohols, for example, Epodil 748 available from Evonik, and glycidyl esters of monocarboxylic acids such as glycidyl neodecanoate, and mixtures of any of the foregoing. Further non-limiting examples include epoxidized vegetable oils, and epoxidized polyether glycols, such as polypropylene glycol diglycidyl ether or poly(tetramethylene glycol) diglycidyl ether.

The epoxy-containing compound may comprise a combination of any of the aromatic epoxides described above and any of the aliphatic epoxides described above.

The epoxy-containing compound may comprise an epoxy-adduct. The composition may comprise one or more epoxy-adducts. As used herein, the term "epoxy-adduct" refers to a reaction product comprising the residue of an epoxy and at least one other compound that does not include an epoxide functional group. The epoxy-adduct may comprise an aromatic epoxy or an aliphatic epoxy. The epoxy-containing compound may comprise a carboxyl-terminated butadiene-acrylonitrile copolymer adducted with an epoxy-containing compound. Additionally, the epoxy-adduct may comprise the reaction product of reactants comprising an epoxy, a polyol, and an anhydride. The term "epoxy-adduct" used with respect to the epoxy-containing compound is different than the epoxide-functional adduct described below.

The epoxy used to form the epoxy-adduct may comprise any of the epoxy-containing compounds listed above that may be included in the composition.

The polyol used to form the epoxy-adduct may include diols, triols, tetraols and higher functional polyols. Combinations of such polyols may also be used. The polyols may be based on a polyether chain derived from ethylene glycol, propylene glycol, butylene glycol, hexylene glycol and the like as well as mixtures thereof. The polyol may also be based on a polyester chain derived from ring opening polymerization of caprolactone (referred to as polycaprolactone-based polyols hereinafter). Suitable polyols may also include polyether polyols, polyurethane polyols, polyurea polyols, acrylic polyols, polyester polyols, polybutadiene polyols, hydrogenated polybutadiene polyols, polycarbonate polyols, polysiloxane polyols, and combinations thereof. Polyamines corresponding to polyols may also be used, and in this case, amides instead of carboxylic esters will be formed with the anhydrides.

The polyol may comprise a polycaprolactone-based polyol. The polycaprolactone-based polyols may comprise diols, triols or tetraols terminated with primary hydroxyl groups. Commercially available polycaprolactone-based polyols include those sold under the trade name Capa^{™} from Perstorp Group, such as, for example, Capa 2054, Capa 2077A, Capa 2085, Capa 2205, Capa 3031, Capa 3050, Capa 3091 and Capa 4101.

The polyol may comprise a polytetrahydrofuran-based polyol. The polytetrahydrofuran-based polyols may comprise diols, triols or tetraols terminated with primary hydroxyl groups. Commercially available polytetrahydrofuran-based polyols include those sold under the trade name Terathane^{®}, such as Terathane^{®} PTMEG 250 and Terathane^{®} PTMEG 650 which are blends of linear diols in which the hydroxyl groups are separated by repeating tetramethylene ether groups, available from Invista. In addition, polyols based on dimer diols sold under the trade names Pripol^{®}, Solvennol^{™} and Empol^{®}, available from Cognis Corporation, or bio-based polyols, such as the tetrafunctional polyol Agrol 4.0, available from BioBased Technologies, may also be utilized.

The anhydride that may be used to form the epoxy-adduct may comprise any suitable acid anhydride known in the art. For example, the anhydride may comprise hexahydrophthalic anhydride and its derivatives (e.g., methyl hexahydrophthalic anhydride); phthalic anhydride and its derivatives (e.g., methyl phthalic anhydride); maleic anhydride; succinic anhydride; trimelletic anhydride; pyromelletic dianhydride (PMDA); 3,3',4,4'-oxydiphthalic dianhydride (ODPA); 3,3',4,4'-benzophenone tetracarboxylic dianhydride (BTDA); and 4,4'-diphthalic (hexafluoroisopropylidene) anhydride (6FDA).

The epoxy-adduct may comprise a diol, a monoanhydride, and a diepoxy compound, wherein the mole ratio of diol, monoanhydride, and diepoxy compounds in the epoxy-adduct may vary from 0.5:0.8:1.0 to 0.5:1.0:6.0.

The epoxy-adduct may comprise a triol, a monoanhydride, and a diepoxy compound, wherein the mole ratio of triol, monoanhydride, and diepoxy compounds in the epoxy-adduct may vary from 0.5:0.8:1.0 to 0.5:1.0:6.0.

The epoxy-adduct may comprise a tetraol, a monoanhydride, and a diepoxy compound, wherein the mole ratio of tetraol, monoanhydride, and diepoxy compounds in the epoxy-adduct may vary from 0.5:0.8:1.0 to 0.5:1.0:6.0.

Other suitable epoxy-containing compounds include epoxy-adducts such as epoxy polyesters formed as the reaction product of reactants comprising an epoxy-containing compound, a polyol and an anhydride, as described in U.S. Patent No. 8,796,361, col. 3, line 42 through col. 4, line 65.

The first component optionally may include an epoxy-containing reactive diluent such as those typically used in coating compositions such as adhesive compositions and such reactive diluents may be included as an epoxy-containing compound.

The first component may comprise the epoxy-containing compound in an amount of at least 30 percent by weight based on total weight of the first component, such as at least 35 percent by weight, such as at least 40 percent by weight. The first component may comprise the epoxy-containing compound in an amount of no more than 100 percent by weight based on total weight of the first component, such as no more than 60 percent by weight, such as no more than 55 percent by weight, such as no more than 50 percent by weight. The first component may comprise the epoxy-containing compound in an amount of up to 100 percent by weight, such as 30 percent by weight to 100 percent by weight based on total weight of the first component, such as 30 percent by weight to 60 percent by weight, such as 35 percent by weight to 55 percent by weight, such as 40 percent by weight to 50 percent by weight.

As described above, the first component may comprise an aromatic monoepoxide, an aliphatic monoepoxide and/or an aliphatic polyepoxide. The first component may comprise such epoxides, if present at all, in an amount of at least 0.1 percent by weight based on total weight of the first component, such as at least 0.2 percent by weight, such as at least 0.5 percent by weight. The first component may comprise such epoxides in an amount of no more than 30 percent by weight based on total weight of the first component, such as no more than 25 percent by weight, such as no more than 20 percent by weight. The first component may comprise such epoxides, if present at all, in an amount of 0.1 percent by weight to 30 percent by weight based on total weight of the first component, such as 0.2 percent by weight to 25 percent by weight, such as 0.5 percent by weight to 20 percent by weight.

### Second Component

The second component of the compositions disclosed herein may comprise an aliphatic amine. As used herein, the term "aliphatic amine," when used with respect to an ingredient of the second component, refers to an aliphatic amine that is substantially free of oxygen, sulfur, and/or selenium and comprises a molecular weight of no more than 295 g/mol as measured using mass spectrometry as described herein above.

The aliphatic amine may comprise a cycloaliphatic amine, a linear or branched aliphatic amine containing no cyclic groups, an araliphatic amine, or an amine comprising ethyleneimine subunits. Useful aliphatic diamines include, but are not limited to, ethylenediamine, tetramethylenediamine, hexamethylenediamine, octamethylenediamine, 2-methylpentamethylenediamine (available as Dytek A from Invista). Useful cycloaliphatic amines include, but are not limited to, isophorone diamine, 4,4-diaminodicylohexylmethane, 4,4'-methylenebis(2-methylcyclohexyl-amine), diaminocyclohexane, bis(aminomethyl)norbornane, bis(aminomethyl)cyclohexane, piperazine, and aminoethylpiperazine. Useful araliphatic amines include the *ortho-, meta-,* and *para-* isomers of xylylenediamine and mixtures thereof. Useful amines comprising an ethyleneimine subunit include diethylenetriamine, triethylenetetramine, tetraethylenepentamine, higher oligomers, and tris(aminoethyl)amine.

The aliphatic amine may comprise a molecular weight of at least 60 g/mol, such as at least 80 g/mol, such as at least 110 g/mol. The aliphatic amine may comprise a molecular weight of no more than 295 g/mol, such as a no more than 260g/mol, such as no more than 250 g/mol. The aliphatic amine may comprise a molecular weight of 60 g/mol to 295 g/mol, such as 80 g/mol to 260 g/mol, such as 110 g/mol to 250 g/mol. The molecular weight of the aliphatic amine may be measured using mass spectrometry as described hereinabove.

The second component may comprise an amidoamine. An amidoamine refers to any compound comprising amide bonds and amine functional groups. A fatty acid amidoamine refers to an amidoamine comprising a fatty acid residue.

Suitable examples of amidoamines include reaction products of any acid-functional compound and any polyamine or combination of polyamines. Suitable examples of acid-functional compounds suitable for production of amidoamines include a fatty acid, a dimerized fatty acid, a trimerized fatty acid, an acid-functional polymer such as a polyester or an acrylic copolymer, and/or an acid-functional small molecule. Suitable acids include, but are not limited to, succinic acid, glutaric acid, adipic acid, pimelic acid, suberic acid, cyclohexanedicarboxylic acid, azelaic acid, sebacic acid, undecanedioic acid, dodecanedioic acid, brassylic acid, malic acid, tartaric acid, phthalic acid, isopthalaic acid, and terepthalic acid. Additional suitable acids include acrylic copolymers comprising an acid functional monomer such as acrylic acid, methacrylic acid, maleic acid or itatonic acid.

In some cases, the amidoamine may comprise a fatty acid amidoamine comprising the reaction product of a fatty acid, a dimerized fatty acid, and/or a trimerized fatty acid and any polyamine or combination of polyamines. Suitable fatty acid amidoamines include Versamid 100, Versamid 125, Versamid 140, and Versamid 150 available from Huntsman Corporation. Additional suitable fatty acid amidoamines include amidoamine Ancamide^{®} products available from Evonik Industries AG, Jointmide products available from Epochemie International, ChemCure^{®} amidoamines available from Cargill, Inc., and Epikure^{™} amidoamine curing agents available from Westlake Corporation. In some cases, the amidoamines may be a reaction product of fatty acids and amines comprising an ethyleneimine subunit, such as diethylenetriamine, triethylenetetramine, or tetraethylenepentamine. In some cases, the amidoamines may be a reaction product of fatty acids and aliphatic amines or cycloaliphatic amines.

The second component may comprise a flexibilizing amine. As used herein, the term "flexibilizing amine" refers to an etheramine having a molecular weight of greater than 140 g/mol or a fatty acid dimer or trimer amine having a molecular weight greater than 295 g/mol.

Suitable flexibilizing amines include oligomeric or polymeric diamines or polyamines with a glass transition temperature of greater than -150°C and less than 30°C, calculated, for example, using the Fox Equation.

Suitable examples of flexibilizing amines include amine-terminated polyethers, such as amine-terminated poly(propylene glycol) or amine-terminated poly(ethylene glycol)-poly(propylene glycol) copolymers. Suitable examples include Jeffamine D-400, Jeffamine ED-600, and Jeffamine ED-900 available from Huntsman Corporation.

In some preferred cases, the flexibilizing amine may comprise amine-terminated polymers or oligomers comprising poly(tetramethylene ether glycol) subunits. A suitable example is amine-terminated poly(tetramethylene ether glycol)-poly(propylene glycol) copolymer available as Jeffamine THF-100 available from Huntsman.

Additional useful aliphatic etheramines include ethylene glycol bis(2-aminoethyl) ether (available as Jeffamine EDR-148 from Huntsman), diethylene glycol bis(2-aminoethyl) ether, diethylene glycol bis(3-aminopropyl) ether (available as Ancamine 1922A from Evonik or Baxxodur EC 130 from BASF), bis(aminopropyl) 1,4-butanediol (available from BASF SE) or combinations thereof. In some cases, these etheramines may be modified by reaction/adducting with other molecules such as epoxy, carboxylic acid, or phenol containing resins.

The flexibilizing amine comprising the etheramine may comprise a molecular weight of greater than 140 g/mol, such as at least 170 g/mol, such as at least 210 g/mol. The flexibilizing amine comprising the etheramine may comprise a molecular weight of no more than 2,000 g/mol, such as no more than 1,700 g/mol, such as no more than 1,300 g/mol, such as no more than 1,200 g/mol. The flexibilizing amine may comprise a molecular weight of greater than 140 g/mol to 2,000 g/mol, such as 170 g/mol to 1,700 g/mol, such as 210 g/mol to 1,300 g/mol, such as 210 g/mol to 1,200 g/mol. The molecular weight of the flexibilizing amine may be measured using mass spectrometry as described hereinabove.

Additional suitable examples of the flexibilizing amine include fatty acid dimer or trimer diamines available from Croda Smart Materials. Suitable examples include Priamine 1071, Priamine 1074, and Priamine 1075.

The flexibilizing amine comprising a fatty acid dimer or trimer amine may comprise a molecular weight of greater than 295 g/mol, such as at least 400 g/mol, such as at least 500 g/mol. The flexibilizing amine may comprise a molecular weight of no more than 2,000 g/mol, such as no more than 1,700 g/mol, such as no more than 1,300 g/mol, such as no more than 1200 g/mol. The flexibilizing amine may comprise a molecular weight of greater than 295 g/mol to 2,000 g/mol, such as 400 g/mol to 1,700 g/mol, such as 500 g/mol to 1,300 g/mol, such as 500 g/mol to 1,200 g/mol. The molecular weight of the flexibilizing amine may be measured using mass spectrometry as described hereinabove.

The second component may comprise the flexibilizing amine in an amount of at least 15 percent by weight based on total weight of the flexibilizing amine, the aliphatic amine and the amidoamine, such as at least 25 percent by weight. The second component may comprise the flexibilizing amine in an amount of no more than 75 percent by weight based on total weight of the flexibilizing amine, the aliphatic amine and the amidoamine, such as no more than 65 percent by weight, such as no more than 60 percent by weight. The second component may comprise the flexibilizing amine in an amount of 15 percent by weight to 75 percent by weight based on total weight of the flexibilizing amine, the aliphatic amine and the amidoamine, such as 25 percent by weight to 65 percent by weight, such as 25 percent by weight to 60 percent by weight.

The second component may comprise the aliphatic amine in an amount of at least 5 percent by weight based on total weight of the flexibilizing amine, the aliphatic amine and the amidoamine, such as at least 10 percent by weight, such as at least 15 percent by weight. The second component may comprise the flexibilizing amine in an amount of no more than 50 percent by weight based on total weight of the flexibilizing amine, the aliphatic amine and the amidoamine, such as no more than 45 percent by weight, such as no more than 40 percent by weight. The second component may comprise the flexibilizing amine in an amount of 5 percent by weight to 50 percent by weight based on total weight of the flexibilizing amine, the aliphatic amine and the amidoamine, such as 10 percent by weight to 45 percent by weight, such as 15 percent by weight to 40 percent by weight.

The second component may comprise the flexibilizing amine in an amount of at least 5 percent by weight based on total weight of the flexibilizing amine, the aliphatic amine and the amidoamine, such as at least 10 percent by weight, such as at least 15 percent by weight. The second component may comprise the flexibilizing amine in an amount of no more than 75 percent by weight based on total weight of the flexibilizing amine, the aliphatic amine and the amidoamine, such as no more than 50 percent by weight, such as no more than 40 percent by weight. The second component may comprise the flexibilizing amine in an amount of 5 percent by weight to 75 percent by weight based on total weight of the flexibilizing amine, the aliphatic amine and the amidoamine, such as 10 percent by weight to 50 percent by weight, such as 15 percent by weight to 40 percent by weight.

### Accelerators

In addition to the aliphatic amine, flexibilizing amine, and amidoamine-based amine curing agents disclosed above, additional accelerators may be included to further modify the adhesive properties. These include, but are not limited to, additional amines, amine adducts, thiols, or other nucleophilic compounds. These curing agents may be monofunctional, difunctional, or polyfunctional with respect to their epoxy reactive functional group. Useful monoamines include, but are not limited to, aniline, ethanolamine, N-methylethanolamine, butylamine, benzylamine, allylamine, ethylhexylamine, polypropylene glycol monoamines such as Jeffamine-M600 available from Huntsman. Adducts of any of the amines described above with epoxy resins may be included. Additional amine-based curing agents such as phenalkamines may be included.

In other examples, the accelerator may comprise, or consist essentially of, or consist of, a guanidine. It will be understood that "guanidine," as used herein, refers to guanidine and derivatives thereof. For example, the curing agent that may be used includes guanidines, substituted guanidines, substituted ureas, melamine resins, guanamine derivatives, and/or mixtures thereof. Examples of substituted guanidines are methylguanidine, dimethylguanidine, trimethylguanidine, tetramethylguanidine, methylisobiguanidine, dimethylisobiguanidine, tetramethylisobiguanidine, hexamethylisobiguanidine, heptamethylisobiguanidine and, more especially, cyanoguanidine (dicyandiamide, e.g., Dyhard^{®} available from AlzChem). Representatives of suitable guanamine derivatives which may be mentioned are alkylated benzoguanamine resins, benzoguanamine resins or methoxymethylethoxymethylbenzoguanamine.

For example, the guanidine may comprise a compound, moiety, and/or residue having the following general structure: 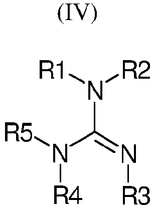 wherein each of R1, R2, R3, R4, and R5 (i.e., substituents of structure (IV)) comprise hydrogen, (cyclo)alkyl, aryl, aromatic, organometallic, a polymeric structure, or together can form a cycloalkyl, aryl, or an aromatic structure, and wherein R1, R2, R3, R4, and R5 may be the same or different. As used herein, "(cyclo)alkyl" refers to both alkyl and cycloalkyl. When any of the R groups "together can form a (cyclo)alkyl, aryl, and/or aromatic group", it is meant that any two adjacent R groups are connected to form a cyclic moiety, such as the rings in structures (V) - (VIII) below.

It will be appreciated that the double bond between the carbon atom and the nitrogen atom that is depicted in structure (IV) may be located between the carbon atom and another nitrogen atom of structure (IV). Accordingly, the various substituents of structure (IV) may be attached to different nitrogen atoms depending on where the double bond is located within the structure.

The guanidine may comprise a cyclic guanidine such as a guanidine of structure (IV) wherein two or more R groups of structure (IV) together form one or more rings. In other words, the cyclic guanidine may comprise ≥1 ring(s). For example, the cyclic guanidine may either be a monocyclic guanidine (1 ring) such as depicted in structures (V) and (VI) below, or the cyclic guanidine may be bicyclic or polycyclic guanidine (≥2 rings) such as depicted in structures (VII) and (VIII) below.

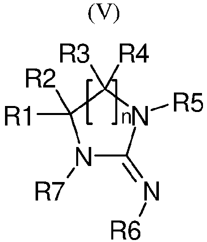

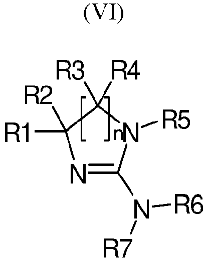

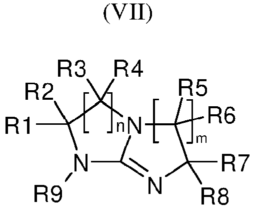

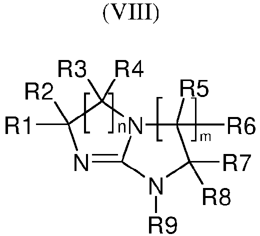

Each substituent of structures (V) and/or (VI), R1-R7, may comprise hydrogen, (cyclo)alkyl, aryl, aromatic, organometallic, a polymeric structure, or together can form a cycloalkyl, aryl, or an aromatic structure, and wherein R1-R7 may be the same or different. Similarly, each substituent of structures (VII) and (VIII), R1-R9, may be hydrogen, alkyl, aryl, aromatic, organometallic, a polymeric structure, or together can form a cycloalkyl, aryl, or an aromatic structure, and wherein R1-R9 may be the same or different. Moreover, in some examples of structures (V) and/or (VI), certain combinations of R1-R7 may be part of the same ring structure. For example, R1 and R7 of structure (V) may form part of a single ring structure. Moreover, it will be understood that any combination of substituents (R1-R7 of structures (V) and/or (VI) as well as R1-R9 of structures (VII) and/or (VIII)) may be chosen so long as the substituents do not substantially interfere with the catalytic activity of the cyclic guanidine.

Each ring in the cyclic guanidine may be comprised of ≥5 members. For example, the cyclic guanidine may comprise a 5-member ring, a 6-member ring, and/or a 7-member ring. As used herein, the term "member" refers to an atom located in a ring structure. Accordingly, a 5-member ring will have 5 atoms in the ring structure ("n" and/or "m"=1 in structures (V)-(VIII)), a 6-member ring will have 6 atoms in the ring structure ("n" and/or "m"=2 in structures (V)-(VIII)), and a 7-member ring will have 7 atoms in the ring structure ("n" and/or "m"=3 in structures (V)-(VIII)). It will be appreciated that if the cyclic guanidine is comprised of ≥2 rings (e.g., structures (VII) and (VIII)), the number of members in each ring of the cyclic guanidine can either be the same or different. For example, one ring may be a 5-member ring while the other ring may be a 6-member ring. If the cyclic guanidine is comprised of ≥3 rings, then in addition to the combinations cited in the preceding sentence, the number of members in a first ring of the cyclic guanidine may be different from the number of members in any other ring of the cyclic guanidine.

It will also be understood that the nitrogen atoms of structures (V)-(VIII) may further have additional atoms attached thereto. Moreover, the cyclic guanidine may either be substituted or unsubstituted. For example, as used herein in conjunction with the cyclic guanidine, the term "substituted" refers to a cyclic guanidine wherein R5, R6, and/or R7 of structures (V) and/or (VI) and/or R9 of structures (VII) and/or (VIII) is not hydrogen. As used herein in conjunction with the cyclic guanidine, the term "unsubstituted" refers to a cyclic guanidine wherein R1-R7 of structures (V) and/or (VI) and/or R1-R9 of structures (VII) and/or (VIII) are hydrogen.

The cyclic guanidine may comprise a bicyclic guanidine, and the bicyclic guanidine may comprise 1,5,7-triazabicyclo[4.4.0]dec-5-ene ("TBD" or "BCG") or 7-methyl-1,5,7-triazabicyclo[4.4.0]dec-5-ene (MTBD).

Other useful accelerators may comprise amine, amino-containing phenols, dihydrazide, imidazole, or dicyandiamide adducts and complexes, such as, for example, one of the Ajicure^{®} products available from Ajinomoto Fine Techno Company, 3,4-dichlorophenyl-N,N-dimethylurea (A.K.A. Diuron) available from Alz Chem, or combinations thereof.

Useful accelerators that may be included in the second component of the composition may comprise secondary amines, tertiary amines, cyclic tertiary amines, amidines, or combinations thereof. The cyclic tertiary amine may comprise 1,4-diazabicyclo[2.2.2]octane ("DABCO"), 1,8-diazabicylo[5.4.0]undec-7-ene ("DBU"), 1,5-diazabicyclo[4.3.0]non-5-ene ("DBN"), and combinations thereof. Additional examples of suitable accelerators include, pyridine, imidazole, dimethylaminopyridine, 1-methylimidazole, N,N'-carbonyldiimidazole, [2,2]bipyridine, 2,4,6-tris(dimethylamino methyl)phenol, 3,5-dimethylpyrazole, and combinations thereof. Additional examples of useful accelerators include Mannich bases, tetraalkyl ammonium salts, metal salts, and strong bases.

The accelerator may comprise both a tertiary amine and a group reactive with epoxy groups. The accelerator may comprise a tertiary amine and a primary amine. Examples of such accelerators include tris(2-aminoethyl)amine, tris(3-aminopropyl)amine, tris[2-(methylamino)ethyl]amine, 2-(dimethylamino)ethylamine, 3-(dimethylamino)-1-propylamine, 1,4-bis(3-aminopropyl)piperazine, N,N,N',N,-tetrakis(3-aminopropyl)-1,4-butanediamine.

The composition may comprise the accelerator in an amount of at least 0.1 percent by weight based on total weight of the composition, such as at least 0.2 percent by weight, such as at least 0.5 percent by weight. The composition may comprise the accelerator in an amount of no more than 10 percent by weight based on total weight of the composition, such as no more than 5 percent by weight, such as no more than 2.5 percent by weight. The composition may comprise the accelerator in an amount of 0.1 percent by weight to 10 percent by weight based on total weight of the composition, such as 0.2 percent by weight to 5 percent by weight, such as 0.5 percent by weight to 2.5 percent by weight.

### Elastomeric Particles

The composition may further comprise elastomeric particles. The elastomeric particles may be in the first component, the second component, a third or higher component or combinations thereof. As used herein, "elastomeric particles" refers to particles comprised of one or more materials having at least one glass transition temperature (Tg) of greater than -150°C and less than 30°C, calculated, for example, using the Fox Equation or measured, for example, using differential scanning calorimetry. As used herein, the term "glass transition temperature" ("Tg") refers to the temperature at which an amorphous material, such as glass or a polymer, changes from a brittle vitreous state to a plastic state or from a plastic state to a brittle vitreous state.

The elastomeric particles may be phase-separated from the epoxy-containing component. As used herein, the term "phase-separated" means forming a discrete domain within a matrix of the epoxy-containing component.

The elastomeric particles may have a core/shell structure. Suitable core-shell elastomeric particles may be comprised of an acrylic shell and an elastomeric core. The core may comprise natural or synthetic rubbers, polybutadiene, styrene-butadiene, polyisoprene, chloroprene, acrylonitrile butadiene, butyl rubber, polysiloxane, polysulfide, ethylene-vinyl acetate, fluoroelastomer, polyolefin, or combinations thereof. The elastomeric particles e.g., may comprise a polybutadiene core, a styrene butadiene core, and/or a polysiloxane core. As used herein, the "elastomeric particles" are not part of the auxiliary toughening agent described below.

According to the present disclosure, the average particle size of the elastomeric particles may be at least 20 nm, as measured by transmission electron microscopy (TEM), such as at least 30 nm, such as at least 40 nm, such as at least 50 nm. The average particle size of the elastomeric particles may be no more than 400 nm, as measured by transmission electron microscopy (TEM), such as no more than 300 nm, such as no more than 200 nm, such as no more than 150 nm. According to the present disclosure, the average particle size of the elastomeric particles may be 20 nm to 400 nm as measured by TEM, such as 30 nm to 300 nm, such as 40 nm to 200 nm, such as 50 nm to 150 nm. Suitable methods of measuring particle sizes by TEM include suspending elastomeric particles in a solvent selected such that the particles do not swell, and then drop casting the suspension onto a TEM grid which is allowed to dry under ambient conditions. For example, epoxy resin containing core-shell rubber elastomeric particles from Kaneka Texas Corporation can be diluted in butyl acetate for drop casting. Particle size measurements may be obtained from images acquired using a Tecnai T20 TEM operating at 200kV and analyzed using ImageJ software, or an equivalent instrument and software.

According to the present disclosure, the elastomeric particles may optionally be included in an epoxy carrier resin for introduction into the coating composition. Suitable finely dispersed core-shell elastomeric particles comprising an average particle size as described above may be master-batched in epoxy resin such as aromatic epoxides, phenolic novolac epoxy resin, bisphenol A and/or bisphenol F diepoxide, and/or aliphatic epoxides, which include cyclo-aliphatic epoxides, at concentrations ranging from 1% to 80% core-shell elastomeric particles by weight based on the total weight of the elastomeric dispersion, such as from 5% to 50%, such as from 15% to 35%. Suitable epoxy resins may also include a mixture of epoxy resins. When utilized, the epoxy carrier resin may be an epoxy-containing component of the present disclosure such that the weight of the epoxy-containing component present in the coating composition includes the weight of the epoxy carrier resin.

Exemplary non-limiting commercial core-shell elastomeric particle products using poly(butadiene) rubber particles that may be utilized in the coating composition of the present disclosure include core-shell poly(butadiene) rubber powder (commercially available as PARALOID^{™} EXL 2650A from Dow Chemical), a core-shell poly(butadiene) rubber dispersion (25% core-shell rubber by weight) in bisphenol F diglycidyl ether (commercially available as Kane Ace MX 136), a core-shell poly(butadiene) rubber dispersion (33% core-shell rubber by weight) in Epon^{®} 828 (commercially available as Kane Ace MX 153), a core-shell poly(butadiene) rubber dispersion (33% core-shell rubber by weight) in Epiclon^{®} EXA-835LV (commercially available as Kane Ace MX 139), a core-shell poly(butadiene) rubber dispersion (37% core-shell rubber by weight) in bisphenol A diglycidyl ether (commercially available as Kane Ace MX 257), and a core-shell poly(butadiene) rubber dispersion (37% core-shell rubber by weight) in Epon^{®} 863 (commercially available as Kane Ace MX 267), each available from Kaneka Texas Corporation.

Exemplary non-limiting commercial core-shell elastomeric particle products using styrene-butadiene rubber particles that may be utilized in the coating composition include a core-shell styrene-butadiene rubber powder (commercially available as CLEARSTRENGTH^{®} XT100 from Arkema), an MMA-Styrene-Butadiene core shell rubber (commercially available as Clearstrength XT 100 from Arkema), a core-shell styrene-butadiene rubber powder (commercially available as PARALOID^{™} EXL 2650J), a core-shell styrene-butadiene rubber dispersion (33% core-shell rubber by weight) in bisphenol A diglycidyl ether (commercially available as Fortegra^{™} 352 from Olin^{™}), a core-shell styrene-butadiene rubber dispersion (33% rubber by weight) in low viscosity bisphenol A diglycidyl ether (commercially available as Kane Ace MX 113), a core-shell styrene-butadiene rubber dispersion (25% core-shell rubber by weight) in bisphenol A diglycidyl ether (commercially available as Kane Ace MX 125), a core-shell styrene-butadiene rubber dispersion (25% core-shell rubber by weight) in bisphenol F diglycidyl ether (commercially available as Kane Ace MX 135), a core-shell styrene-butadiene rubber dispersion (25% core-shell rubber by weight) in D.E.N.^{™}-438 phenolic novolac epoxy (commercially available as Kane Ace MX 215), a core-shell styrene-butadiene rubber dispersed in bisphenol A epoxy resin (such as KDAD-7101 35% core shell rubber by weight) (commercially available from Kukdo Chemical), a core-shell styrene-butadiene rubber dispersion (25% core-shell rubber by weight) in Araldite^{®} MY-721 multi-functional epoxy (commercially available as Kane Ace MX 416), a core-shell styrene-butadiene rubber dispersion (25% core-shell rubber by weight) in MY-0510 multi-functional epoxy (commercially available as Kane Ace MX 451), a core-shell styrene-butadiene rubber dispersion (25% core-shell rubber by weight) in Syna Epoxy 21 Cyclo-aliphatic Epoxy from Synasia (commercially available as Kane Ace MX 551), and a core-shell styrene-butadiene rubber dispersion (25% core-shell rubber by weight) in polypropylene glycol (MW 400) (commercially available as Kane Ace MX 715), each available from Kaneka Texas Corporation.

Exemplary non-limiting commercial core-shell elastomeric particle products using polysiloxane rubber particles that may be utilized in the coating composition of the present disclosure include a core-shell polysiloxane rubber powder (commercially available as GENIOPERL^{®} P52 from Wacker), a core-shell polysiloxane rubber dispersion (40% core-shell rubber by weight) in bisphenol A diglycidyl ether (commercially available as ALBIDUR^{®} EP2240A from Evonick), a core-shell polysiloxane rubber dispersion (25% core-shell rubber by weight) in Epon 828 (commercially available as Kane Ace MX 960), a core-shell polysiloxane rubber dispersion (25% core-shell rubber by weight) in Epon^{®} 863 (commercially available as Kane Ace MX 965) each available from Kaneka Texas Corporation.

The composition may comprise the elastomeric particles in an amount of at least 2.5 percent by weight based on the total weight of the composition, such as at least 5 percent by weight, such as at least 7.5 percent by weight. The composition may comprise the elastomeric particles in an amount of no more than 25 percent by weight based on the total composition weight, such as no more than 22.5 percent by weight, such as no more than 20 percent by weight. The composition may comprise the elastomeric particles in an amount of 2.5 percent by weight to 25 percent by weight based on the total composition weight, such as 5 percent by weight to 22.5 percent by weight, such as 7.5 percent by weight to 20 percent by weight.

### Reinforcing fillers

Optionally, the composition may further comprise a reinforcement filler. The reinforcing filler may be present in first component, the second component, a third or higher component or combinations thereof. The composition may comprise particles of a single type of reinforcement filler or may comprise particles of two or more types of reinforcement filler. That is, the reinforcement filler may comprise particles of a first reinforcement filler and may further comprise particles of a second (i.e., a second, a third, a fourth, etc.) reinforcement filler that is different from the first reinforcement filler. As used herein with respect to types of reinforcement filler utilized in the compositions disclosed herein, reference to "first," "second", etc. is for convenience only and does not refer to order of addition to the composition or the components comprising the composition.

Useful reinforcement fillers that may be introduced to the adhesive composition to provide improved mechanical properties include fibrous materials such as fiberglass, fibrous titanium dioxide, whisker type calcium carbonate (aragonite), carbon fiber (which includes graphite and carbon nanotubes), basalt fibers, and ceramic fibers. Additional reinforcement fillers include those with a plate-like or needle-like morphology, including, but not limited to, wollastonite (calcium inosilicate), talc (hydrated magnesium silicate), mica, micaceous iron oxides, glass flake, aluminum flakes, and boron nitride. Additional reinforcement fillers include those with spherical or irregular morphologies, such as titanium dioxide, spherical aluminum, or calcium carbonate.

The reinforcement filler may comprise an average particle size in the largest dimension of at least 5 microns, such as at least 8 microns, such as at least 10 microns. The reinforcement filler may comprise an average particle size in the largest dimension of no more than 1000 microns, such as no more than 500 microns, such as no more than 100 microns. The reinforcement filler may comprise an average particle size in the largest dimension of 5 microns to 1000 microns, such as 8 microns to 500 microns, such as 10 microns to 100 microns. Particle size may be measured, for example, using dynamic light scattering (DLS), such as using a Malvern Autosizer Lo-C or an equivalent instrument, or a scanning electron microscope (SEM), such as a Quanta 250 FEG SEM or an equivalent instrument.

If utilized at all, the composition may comprise such reinforcement fillers in an amount of at least 2.5 percent by weight based on total weight of the composition, such as at least 5 percent by weight. If utilized at all, the composition may comprise such reinforcement fillers in an amount of no more than 30 percent by weight based on total weight of the composition, such as no more than 25 percent by weight, such as no more than 20 percent by weight. If utilized at all, the composition may comprise such reinforcement fillers in an amount of up to 30 percent by weight based on total weight of the composition, such as 2.5 percent by weight to 25 percent by weight, such as 5 percent by weight to 20 percent by weight.

### Additives

The composition may optionally comprise at least one additive. As used herein, an "additive" refers to a rheology modifier, a tackifier, a surface-active agent, a wetting agent, a flame retardant, a corrosion inhibitor, a UV stabilizer, a colorant, a tint, a solvent, a plasticizer, an adhesion promoter, an antioxidant, a defoamer, an oil, a rust inhibitor, a silane, a silane terminated polymer, a silyl terminated polymer, and/or a moisture scavenger.

Rheology modifiers optionally may include thixotropes. Thixotropes may be sag control agents. Useful thixotropes and/or sag control agents that may be used include wax, fumed silica, castor wax, clay, organo clay, fibers such as Aramid^{®} fibers and Kevlar^{®} fibers, ceramic fibers, and/or engineered cellulose fibers. Waxes useful in the compositions disclosed herein are not particularly limited provided the wax has properties suitable for thixotropy and/or sag control. Generally, the wax may have a weight-average molecular weight of less than 10,000. Examples of suitable waxes useful in the compositions disclosed herein include microcrystalline waxes, polyethylene waxes, Fischer-Tropsch waxes, paraffin waxes, Castor wax, polypropylene waxes, amide derivatives of the former, or combinations thereof. Further examples of suitable thixotropes and/or sag control agents include organic resins or solids comprising chemical linkages with hydrogen bonding capability, such as polyurethane, polyurea, polyester, polyaramid, polyimide, carbodiimide, and combinations thereof. Such polyureas may include those disclosed in U.S. Patent No. 4,965,317 at col. 5, line 10 to col. 6, line 24. The organic resins or solids may optionally comprise reactive functional groups such as epoxide, isocyanate, or ethylenic unsaturation. Combinations of thixotropes may be used to achieve sag control.

Examples of suitable wetting agents include those under the commercial name BYK^{®}, DISPERBYK^{®}, DOWSIL^{™}, TEGO^{®} Wet, and TERGITOL^{™}.

Examples of suitable corrosion inhibitors include, for example, zinc phosphate-based corrosion inhibitors, for example, micronized Halox^{®} SZP-391, Halox^{®} 430 calcium phosphate, Halox^{®} ZP zinc phosphate, Halox^{®} SW-111 strontium phosphosilicate, Halox^{®} 720 mixed metal phosphor-carbonate, and Halox^{®} 550 and 650 proprietary organic corrosion inhibitors commercially available from Halox. Other suitable corrosion inhibitors include Heucophos^{®} ZPA zinc aluminum phosphate and Heucophos^{®} ZMP zinc molybdenum phosphate, commercially available from Heucotech Ltd.

A corrosion inhibitor can comprise a lithium silicate such as lithium orthosilicate (Li₄SiO₄) and lithium metasilicate (Li₂SiO₃), MgO, an azole, or a combination of any of the foregoing. The corrosion inhibiting component may further comprise at least one of magnesium oxide (MgO) and an azole.

Useful colorants or tints may include phthalocyanine blue and ultramarine blue.

Compositions provided by the present disclosure can comprise a flame retardant or combination of flame retardants. Certain thermally conductive materials such as aluminum hydroxide and magnesium hydroxide, for example, also may be flame retardants. As used herein, "flame retardant" refers to a material that slows down or stops the spread of fire or reduces its intensity. Flame retardants may be available as a powder that may be mixed with a composition, a foam, or a gel. In examples, when the compositions disclosed herein include a flame retardant, such compositions may form a coating on a substrate surface and such coating may function as a flame retardant.

As set forth in more detail below, a flame retardant can include a mineral, an organic compound, an organohalogen compound, an organophosphorous compound, or a combination thereof.

Suitable examples of minerals include huntite, hydromagnesite, various hydrates, red phosphorous, boron compounds such as borates, carbonates such as calcium carbonate and magnesium carbonate, and combinations thereof.

Suitable examples of organohalogen compounds include organochlorines such as chlorendic acid derivatives and chlorinated paraffins; organobromines such as decabromodiphenyl ether (decaBDE), decabromodiphenyl ethane (a replacement for decaBDE), polymeric brominated compounds such as brominated polystyrenes, brominated carbonate oligomers (BCOs), brominated epoxy oligomers (BEOs), tetrabromophthalic anhydride, tetrabromobisphenol A (TBBPA) and hexabromocyclododecane (HBCD). Such halogenated flame retardants may be used in conjunction with a synergist to enhance their efficiency. Other suitable examples include antimony trioxide, antimony pentaoxide, and sodium antimonate.

Suitable examples of organophosphorous compounds include triphenyl phosphate (TPP), resorcinol bis(diphenylphosphate) (RDP), bisphenol A diphenyl phosphate (BADP), and tricresyl phosphate (TCP); phosphonates such as dimethyl methylphosphonate (DMMP); and phosphinates such as aluminum diethyl phosphinate. In one important class of flame retardants, compounds contain both phosphorus and a halogen. Such compounds include tris(2,3-dibromopropyl) phosphate (brominated tris) and chlorinated organophosphates such as tris(1,3-dichloro-2-propyl)phosphate (chlorinated tris or TDCPP) and tetrakis(2-chlorethyl)dichloroisopentyldiphosphate (V6).

Suitable examples of organic compounds include carboxylic acid, dicarboxylic acid, melamine, and organonitrogen compounds.

Other suitable flame retardants include ammonium polyphosphate and barium sulfate.

Suitable solvents include toluene, methyl ethyl ketone, benzene, n-hexane, xylene, and combinations thereof.

Useful plasticizers that may be used include polymers, trimellitates, sebacates, esters, phthalates, citrates, adipates, benzoates, and the like. Non-limiting examples of such plasticizers include diisononylphthalate (Jayflex^{™} DINP available from Exxon Mobil), dioctylphthalate (Cereplas DOA^{™} available from Valtris), diisodecylphthalate (Jayflex^{™} DIDP available from Exxon Mobil), and alkyl benzyl phthalate (Santicizer 278 available from Valtris); benzoate-based plasticizers such as dipropylene glycol dibenzoate (K-Flex^{®} available from Emerald Performance Materials); and other plasticizers including terephthalate-based dioctyl terephthalate (DEHT available from Eastman Chemical Company), alkylsulfonic acid ester of phenol (Mesamoll available from Borchers), epoxidized soybean oil (Plaschek 775 from Valtris), citric acid esters (Citroflex available from Morflex), phenylphophates (Santicizer 148 from Solutia), and 1,2-cyclohexane dicarboxylic acid diisononyl ester (Hexamoll DINCH available from BASF).

Adhesion promoters may be included in either component of the composition. Suitable adhesion promoters may include silanes, such as epoxy silanes ((3-glycidyloxypropyl)trimethoxysilane, (3-glycidyloxypropyl)triethoxysilane, 3-glycidoxypropyldimethoxymethylsilane), amino silanes ((3-aminopropyl)trimethoxysilane, (3-aminopropyl)triethoxysilane, ), mecapto silanes ((3-mercaptopropyl)methyldimethoxysilane , (3-mercaptopropyl)trimethoxysilane, ), or acrylate silanes (3-(trimethoxysilyl)propyl acrylate, 3-(trimethoxysilyl)propyl methacrylate), titanates such as monoalkoxy, neoalkoxy, oxyacetate, and cycloheteroatom, or zirconates such as coordinate, cycloheteroatom, and neoalkoxy.

Stabilizers may be blended to prevent reduction of molecular weight by heating, gelation, coloration, generation of an odor and the like to improve the stability of the adhesive. Stabilizers that may be used in the compositions disclosed herein are not particularly limited. Examples of stabilizers useful in the compositions disclosed herein include an antioxidant, an ultraviolet absorbing agent, or combinations thereof. The stabilizer optionally may be lactone-based. The antioxidant may be used to prevent oxidative degradation of the disclosed compositions. Examples of the antioxidant include phenol-based antioxidants, sulfur-based antioxidants, and phosphorus-based antioxidants. The ultraviolet absorbing agent may be used to improve the light resistance of the disclosed compositions. Examples of the ultraviolet absorbing agent include benzotriazole-based ultraviolet absorbing agents and benzophenone-based ultraviolet absorbing agents. Specific examples of suitable stabilizers include SUMILIZER GM (trade name), SUMILIZER TPD (trade name) and SUMILIZER TPS (trade name) manufactured by Sumitomo Chemical Co., Ltd., IRGANOX 1010 (trade name), IRGANOX HP2225FF (trade name), IRGAFOS 168 (trade name), IRGANOX 1520 (trade name) and TINUVIN P manufactured by Ciba Specialty Chemicals, JF77 (trade name) manufactured by Johoku Chemical Co., Ltd., TOMINOX TT (trade name) manufactured by API Corporation and AO-4125 (trade name) manufactured by ADEKA CORPORATION.

Oils useful in the compositions disclosed herein may include unsaturated renewable oils such as sunflower oil, safflower oil, soybean oil, linseed oil, castor oil, orange oil, rapeseed oil, tall oil, vegetable processing oil, vulcanized vegetable oil, high oleic acid sunflower oil, cottonseed oil, nut oils, and combinations thereof. Useful oils may include mineral oils such as Novadex B111 or Catenex T129 (available from Shell).

The composition may also comprise at least one silane terminated polymer. The silane terminated polymer may be capable of crosslinking in the presence of moisture. The polymer may be an alkoxysilane-terminated polyether, an alkoxysilane-terminated polyurethane, or combinations thereof. The alkoxysilane can be methoxy or ethoxy silane, with one, two, or three alkoxy groups per silane. Commercial examples of alkoxysilane-terminated polymers include the Kaneka MS polymers such as SAX 350, SAX 400, and SAX 750 or the Wacker STP-E series such as STP-E30.

Suitable moisture scavengers include vinyltrimethoxysilane (Silquest A-171 from Momentive), vinyltriethoxysilane (Silquest A-151NT from Momentive), gamma-methacryloxypropyltrimethoxysilane (Silquest A-174NT available from Evonik), molecular sieves, calcium oxide (POLYCAL OS325 available from Mississippi Lime), or combinations thereof.

The composition optionally may further comprise a dispersant. As used herein, the term "dispersant" refers to a substance that may be added to the composition to improve the separation of the thermally conductive filler particles by wetting the particles and breaking apart agglomerates. Suitable dispersants for use in the composition include fatty acid, phosphoric acid esters, polyurethanes, polyamines, polyacrylates, polyalkoxylates, sulfonates, polyethers, and polyesters, or any combination thereof. Non-limiting examples of commercially available dispersants include ANTI-TERRA-U100, DISPERBYK-102, DISPERBYK-103, DISPERBYK-111, DISPERBYK-171, DISPERBYK-2151, DISPERBYK-2059, DISPERBYK-2000, DISPERBYK-2117, and DISPERBYK-2118 available from BYK Company; and SOLSPERSE 24000SC, SOLSPERSE 16000 and SOLSPERSE 8000 hyperdispersants available from The Lubrizol Corporation.

Additives, if present at all, may be present in the composition in a combined amount of at least 0.01 percent by weight based on total weight of the composition, such as at least 0.05 percent by weight. Additives, if present at all, may be present in a combined amount of no more than 15 percent by weight based on total weight of the composition, such as no more than 12 percent by weight, such as no more than 10 percent by weight, such as no more than 3 percent by weight. Such additives, if present at all, may be present in the composition in a combined amount of 0.01 percent by weight to 15 percent by weight based on total weight of the composition, such as 0.01 percent by weight to 12 percent by weight, such as 0.05 percent by weight to 12 percent by weight, such as such as such as 0.05 percent by weight to 10 percent by weight.

### Compositions, Systems and Methods

The 2K compositions disclosed herein may comprise, or may consist essentially of, or may consist of: a first component comprising, or consisting essentially of, or consisting of, an epoxy-containing compound; a second component comprising, or consisting essentially of, or consisting of, an aliphatic amine, an amidoamine, a flexibilizing amine and an accelerator; and elastomeric particles; and optionally a reinforcing filler, an additive, or combinations thereof; wherein the elastomeric particles, reinforcing filler, and additive each may be in the first component and/or the second component.

The 3K compositions disclosed herein may comprise, or may consist essentially of, or may consist of: a first component comprising, or consisting essentially of, or consisting of, an epoxy-containing compound; a second component comprising, or consisting essentially of, or consisting of, an aliphatic amine, an amidoamine, a flexibilizing amine; an accelerator; and elastomeric particles; and optionally a reinforcing filler, an additive, or combinations thereof; wherein the accelerator, elastomeric particles, reinforcing filler, and additive each may be in the first component, the second component and/or a third component or a higher component (i.e., a fourth component, a fifth component, etc.).

The composition may comprise an amine hydrogen:epoxy equivalence of at least 0.75:1, such as at least 0.9:1, such as no more than 1.25:1, such as no more than 1.1:1, such as 0.75:1 to 1.25:1, such as 0.9:1 to 1.1:1.

The composition may be substantially free, or essentially free, or completely free, of a polyurethane resin. As used herein, the term "polyurethane resin" refers to a resin containing more than one carbamate or urea linkage.

The composition may comprise the first component in an amount of at least 50 percent by weight based on total weight of the composition, such as at least 60 percent by weight, such as 70 percent by weight. The composition may comprise the second component in an amount of no more than 90 percent by weight based on total weight of the composition, such as no more than 85 percent by weight, such as no more than 80 percent by weight. The composition may comprise the first component in an amount of 50 percent by weight to 90 percent by weight based on total weight of the composition, such as 60 percent by weight to 85 percent by weight, such as 70 percent by weight to 80 percent by weight.

The composition may comprise the second component in an amount of at least 10 percent by weight based on total weight of the composition, such as at least 15 percent by weight, such as at least 20 percent by weight. The composition may comprise the second component in an amount of no more than 50 percent by weight based on total weight of the composition, such as no more than 40 percent by weight, such as no more than 30 percent by weight. The composition may comprise the second component in an amount of 10 percent by weight to 50 percent by weight based on total weight of the composition, such as 15 percent by weight to 40 percent by weight, such as 20 percent by weight to 30 percent by weight.

It has been surprisingly discovered that coating compositions comprising (i) a curing agent comprising a combination of an aliphatic amine, an amidoamine and a flexibilizing amine, (ii) an accelerator, and (iii) elastomeric particles as disclosed herein form coatings that exhibit the combination of improved structural adhesive performance and improved wedge impact peel resistance under -40°C conditions compared to adhesives formed from compositions that do not include this combination of materials, which do not show improvement in both of these parameters. The adhesives formed from the compositions disclosed herein surprisingly exhibit: (a) a lap shear strength of at least 12 MPa measured according to ASTM D1002-10 using HDG substrate of 0.8 mm thickness dip coated with a 10% by weight solution of heptane and Multidraw KTL N 16 Oil measured using an INSTRON 5567 machine in tensile mode with a pull rate of 10 mm per minute, and (b) a wedge impact peel resistance at -40°C of at least 2.0 N/mm tested according to ISO 11343 Dynamic Resistance to Cleavage testing using HDG substrate of 0.8 mm thickness dip coated with a 10% by weight solution of heptane and Multidraw KTL N 16 Oil measured using an INSTRON CEAST 9350 drop tower model at an impact speed of 2 m/sec, with samples being conditioned at -40°C for at least 30 minutes prior to testing.

Also disclosed herein are methods for preparing one of the compositions disclosed above. The method optionally may comprise mixing the first and second components and optionally the third or higher component at a temperature of less than 50°C, such as 0°C to 50°C, such as 15°C to 35°C, such as at ambient temperature.

The composition described above may be applied alone or as part of a system that can be deposited in a number of different ways onto a number of different substrates. Accordingly, disclosed herein are methods for applying the composition to a substrate comprising, or consisting essentially of, or consisting of, applying one of the compositions described hereinabove to a portion of a surface of the substrate. That is, the composition can be applied to the surface of a substrate in any number of different ways, non-limiting examples of which include brushes, rollers, films, pellets, trowels, spatulas, dips, spray guns and applicator guns to form a coating on a portion of the substrate surface.

After application to the substrate(s), the composition may be cured to form a coating, layer, or film on the substrate surface. The coating, layer, or film may be, for example, an adhesive. For example, the composition may be allowed to cure at room temperature or slightly thermal conditions for any desired time (e.g., from 5 minutes to 30 minutes to many weeks, such as at least 1 week, such as at least 2 weeks, such as at least 3 weeks) sufficient to cure the composition on the substrate(s). Optionally, the composition then may be cured by baking and/or curing at elevated temperature, such as at a temperature of at least 120°C, such as at least 130°C, such as at least 135°C, such no more than 180°C and for any desired time period (e.g., at least 1 minute, such as at least 2 minutes, such as at least 3 minutes, such as at least 4 minutes, such as at least 5 minutes to 1 hour). The composition optionally may be cured at slightly thermal conditions such as 110°C or below, such as 100°C or below, such as 90°C or below, such as 80°C or below, such as 70°C or below, but greater than ambient, such as greater than 40°C, such as greater than 50°C, and for any desired time period (e.g., at least 1 minute, such as at least 2 minutes, such as at least 3 minutes, such as at least 4 minutes, such as at least 5 minutes to 1 hour). Elevated temperatures may be achieved through laser spot heating, induction heating, other electromagnetic heating methods, or combinations thereof.

Also disclosed are methods for forming a bond between two substrates for a wide variety of potential applications in which the bond between the substrates provides mechanical properties related to lap shear strength. The method may comprise, or consist essentially of, or consist of, applying the composition described above to a first substrate; contacting a second substrate to the composition such that the composition is located between the first substrate and the second substrate; and curing the composition under ambient conditions or slightly thermal conditions. For example, the composition may be applied to either one or both of the substrate materials being bonded to form an adhesive bond there between and the substrates may be aligned and pressure and/or spacers may be added to control bond thickness. The composition may be applied to cleaned or uncleaned (i.e., including oily or oiled) substrate surfaces.

The composition may be injected or otherwise placed in a die caster or a mould and dried or cured under ambient conditions or by exposure to an external energy source, for example such as by heating to a temperature of less than 180°C, such as less than 130°C, such as less than 90°C to form a part or a member and optionally may be machined to a particular configuration.

### 3-D Printing

Compositions of the present disclosure may be applied or deposited using any suitable method, including those aforementioned. Alternatively, the composition may be casted, extruded, molded, or machined to form a part or a member.

The compositions disclosed herein may be used in any suitable additive manufacturing technology, such as three-dimensional (3D) printing, extrusion, jetting, and binder jetting. Additive manufacturing refers to a process of producing a part or member by constructing it in layers, such as one layer at a time.

The present disclosure is also directed to the production of structural articles, such as by way of a non-limiting example, sound damping pads, using an additive manufacturing process, such as 3D printing. 3D printing refers to a computerized process, optionally including artificial intelligence modulation, by which materials are printed or deposited in successive layers to produce a 3D part or member, such as, by way of a non-limiting example, sound damping pads in a battery assembly. A 3D part or member may be produced by depositing successive portions or layers over a base of any spatial configuration and thereafter depositing additional portions or layers over the underlying deposited portion or layer and/or adjacent to the previously deposited portion or layer to produce the 3D printed part or member.

It will be appreciated that the configuration of the 3D printing process, including the selection of suitable deposition equipment, depends on a number of factors such as the deposition volume, the viscosity of the composition and the complexity of the part being fabricated. Any suitable mixing, delivery, and 3D printing equipment as known to those skilled in the art, may be used. Compositions may be printed or deposited in any size and/or shape of droplets or extrudate, and in any patterns to produce the 3D structure.

Compositions as disclosed herein may be applied or deposited by any suitable 3D printing method as known to those skilled in the art. First and second components of 2K compositions may be mixed and then deposited, or the first and second components may be deposited separately, such as simultaneously and/or sequentially.

First and second components may be premixed, i.e., mixed together, prior to application, and then deposited. The mixture may be reacted or thermoset when the material is deposited; the deposited reaction mixture may react in part after deposition and may also react with previously deposited portions and/or subsequently deposited portions of the article such as underlying layers or overlying layers of the article.

In a non-limiting example, the first and two components may be released from their individual storage containers and pushed, such as pumped through conduits, such as hoses, to a mixer, such as a static or dynamic mixer, wherein the composition may be mixed for a time sufficient to homogenize the composition, wherein the composition may then be released through an outlet. The outlet may be a deposition device, such as a printing head, and/or the materials may exit the mixing unit and be pushed, such as by a pump, through a conduit, such as a hose, to the printing head. The printing head may optionally be mounted on a 3D rotational robotic arm to allow delivery of 3D print compositions to any base in any spatial configuration and/or the base may be manipulated in any spatial configuration during the 3D printing process.

Alternatively, first and second components may be deposited independently from different printing heads. The first component may be deposited from one printing head and the second component may be deposited from a second printing head. The first and second components may be deposited in any pattern such that the first and second components comprising any deposited layer can react together as well as react with underlying and/or overlying layers to produce the 3D printed part or member.

Methods provided by the present disclosure include printing the composition on a fabricated part. Methods provided by the present disclosure include directly printing parts.

Using the methods provided by the present disclosure parts can be fabricated. The entire part can be formed from one of the compositions disclosed herein, one or more portions of a part can be formed from one of the compositions disclosed herein, one or more different portions of a part can be formed using the compositions disclosed herein, and/or one or more surfaces of a part can be formed from a composition provided by the present disclosure. In addition, internal regions of a part can be formed from a composition provided by the present disclosure.

### Coatings and Formed Parts and Uses Thereof

The compositions disclosed herein may be an adhesive composition, a pottant composition, a gap filler composition, a pre-preg composition, a liquid shim composition, or combinations thereof. That is, the compositions disclosed herein may form coatings. Such coatings may be an adhesive, a pottant, a gap filler, a liquid shim, a composite formed from a pre-preg, or combinations thereof.

Compositions disclosed herein may be used to form coatings such as structural adhesives having (a) a lap shear strength of at least 12 MPa measured according to ASTM D1002-10 using HDG substrate of 0.8 mm thickness oiled with a 10% by weight solution of heptane and Multidraw KTL N 16 Oil measured using an INSTRON 5567 machine in tensile mode with a pull rate of 10 mm per minute, and (b) a wedge impact peel resistance at -40°C of at least 2.0 N/mm tested according to ISO 11343 Dynamic Resistance to Cleavage testing using HDG substrate of 0.8 mm thickness oiled with a 10% by weight solution of heptane and Multidraw KTL N 16 Oil measured using an INSTRON CEAST 9350 drop tower model at an impact speed of 2 m/sec, with samples being conditioned at -40°C for at least 30 minutes prior to testing.

### Substrates

The substrates that may be coated by the compositions disclosed herein are not limited. Suitable substrates include, but are not limited to, materials such as metals or metal alloys, polymeric materials such as hard plastics including filled and unfilled thermoplastic materials or thermoset materials, or composite materials. Other suitable substrates include, but are not limited to, glass or natural materials such as wood. For example, suitable substrates include rigid metal substrates such as ferrous metals, aluminum, aluminum alloys, magnesium titanium, copper, and other metal and alloy substrates. The ferrous metal substrates may include iron, steel, and alloys thereof. Non-limiting examples of useful steel materials include cold rolled steel, galvanized (zinc coated) steel, clectrogalvanized steel, stainless steel (including the 3XX series such as the 301 and 304 series), pickled steel, zinc-iron alloy such as GALVANNEAL, alloys of any of these, and combinations thereof. Combinations or composites of ferrous and non-ferrous metals can also be used. Aluminum alloys of the 1XXX, 2XXX, 3XXX, 4XXX, 5XXX, 6XXX, 7XXX, or 8XXX series as well as clad aluminum alloys and cast aluminum alloys of the A356, 1XX.X, 2XX.X, 3XX.X, 4XX.X, 5XX.X, 6XX.X, 7XX.X, or 8XX.X series also may be used as the substrate. Magnesium alloys of the AZ31B, AZ91C, AM60B, or EV31A series also may be used as the substrate. The substrate also may comprise titanium and/or titanium alloys of grades 1-36 including H grade variants. Other suitable non-ferrous metals include copper and magnesium, as well as alloys of these materials. In examples, the substrate may be a multi-metal article. As used herein, the term "multi-metal article" refers to (1) an article that has at least one surface comprised of a first metal and at least one surface comprised of a second metal that is different from the first metal, (2) a first article that has at least one surface comprised of a first metal and a second article that has at least one surface comprised of a second metal that is different from the first metal, or (3) both (1) and (2). Suitable metal substrates include those that are used in the assembly of vehicular bodies (e.g., without limitation, door, body panel, trunk deck lid, roof panel, hood, roof and/or stringers, rivets, landing gear components, and/or skins used on an aircraft), a vehicular frame, vehicular parts, vehicular outerbodies, motorcycles, wheels, and industrial structures and components. As used herein, "vehicle" or variations thereof includes, but is not limited to, civilian, commercial, and military aircraft, and/or land vehicles such as cars, motorcycles, bicycles including electric bicycles, and/or trucks. The metal substrate also may be in the form of, for example, a sheet of metal or a fabricated part. It will also be understood that the substrate may be pretreated with a pretreatment solution including a zinc phosphate pretreatment solution such as, for example, those described in U.S. Pat. Nos. 4,793,867 and 5,588,989, or a zirconium containing pretreatment solution such as, for example, those described in U.S. Pat. Nos. 7,749,368 and 8,673,091. The substrate may comprise a composite material such as a plastic or a fiberglass composite. The substrate may be a fiberglass and/or carbon fiber composite. The compositions disclosed herein are particularly suitable for use in various industrial or transportation applications including automotive, light, and heavy commercial vehicles, marine, or aerospace.

Illustrating the disclosure are the following examples, which, however, are not to be considered as limiting the disclosure to their details. Unless otherwise indicated, all parts and percentages in the following examples, as well as throughout the specification, are by weight.

### EXAMPLES

Lap shear specimens were prepared with Compositions I through XXIV according to ASTM D1002-10. The substrate used was hot dip galvanized (HDG) steel panels measuring 25.4 mm×101.6 mm×0.8 mm. The galvanized coating weight was 60 grams per square meter with exposed unpolished finish. The panels were ultrasonicated with methyl-ethyl ketone (MEK) and wiped dry with a lint-free cloth. Samples were oiled using a 10% by weight solution of Multidraw KTL N 16 Oil in heptane. Substrates were dipped to a depth of 25 mm, blotted to remove excess liquid, and placed on lint-free wipes with the surface to be adhered to facing up for the solvent to fully evaporate, approximately 30 minutes. Composition was applied to one end of a panel covering the full 25.4 mm width and ≥12.7 mm from one end. A second steel panel of equivalent preparation was then placed over the composition layer in an end-to-end fashion, resulting in a bond area of 25.4 mm×12.7 mm. Lap joints were secured with metal clips and excess composition cleaned, leaving a 45° fillet. Lap joints were allowed to cure at ambient temperature for 7 days. The lap joint specimens were tested using an INSTRON model 5567 in tensile mode with 25.4 mm of steel substrate in each grip and at a pull rate of 10 mm per minute (in accordance with ASTM D1002-10). Wedge impact peel samples were prepared and tested in accordance with ISO 11343; the substrate used was again HDG steel of equivalent composition, thickness, and oiling as the lap shear specimens. Wedge impact specimens were tested according to ISO 11343 Dynamic Resistance to Cleavage testing using an INSTRON CEAST 9350 drop tower model at an impact speed of 2 m/sec. Samples tested at -40°C were conditioned at -40°C for at least 30 minutes before testing.

**Synthesis of Epoxy-Functional Polyester:** To a round-bottom flask was added 134.7 g methylhexahydrophthalic anhydride, 520.1 g Epon 863, and 205.9 g Capa 4101. The mixture was placed under a nitrogen blanket, heated to 90°C, and stirred for 30 minutes. A mixture of 0.3 g triphenylphosphine in 50.8 g Epon 863 was added and the mixture was slowly heated to 120°C for 4 hours. An additional 197.0 g of Epon 863 was added, the mixture was stirred for an additional 15 minutes at 120°C, before allowing to cool, resulting in a resin with a measured epoxy equivalent weight of 304 g/mol to 324 g/mol. The resulting material comprised 43 percent auxiliary toughening agent and a 57 percent unreacted (excess) Epon 863, and this unreacted amount was considered as part of the epoxy-containing component.

**Synthesis of Jeffamine EDR-148-Epon 863 Adduct:** To a round-bottom flask was added 1104.0 g Jeffamine EDR-148. The material was placed under a nitrogen blanket and heated to 70°C. 967.3 g of Epon 863 was added dropwise via an addition funnel, ensuring that the temperature did not exceed 100°C during the addition. The mixture was held at 70°C until thin layer chromatography analysis confirmed consumption of the Epon 863. The resulting material had a theoretical NH equivalent weight of 85 g/mol. The adduct was prepared at a 5.25: 1.0 NH:E ratio. All amounts listed are in grams.

Five compositions were prepared from the mixtures of ingredients shown in Table 1. All compositions were prepared at an amine-hydrogen to epoxy equivalence of 1:1, with elastomeric particle loadings between 10 and 20 wt%, an aliphatic epoxy loading of 5% and a wollastonite NYAD M200 loading of 10 to 20 wt% based on total weight of the composition. Epoxy resins (including masterbatch containing elastomeric particles) and fillers were premixed in a dual-asymmetric centrifugal mixer (DAC 600 FVZ Speedmixer^{™}). Then accelerators, curing agents (combination of aliphatic amine, an amidoamine, and flexibilizing amine), and spacer beads were added, and DAC mixed 2 minutes at 2350 RPM. Lap shear and wedge impact peel specimens were immediately prepared.

| **Table I.** Compositions **I-V** | | | | | |
|---|---|---|---|---|---|
| Components | **I (Comp.)** | **II** | **III** | **IV** | **V** |
| Kane Ace MX-153¹ | | 9.12 | 13.63 | 13.55 | 13.37 |
| Kane Ace MX-136² | 12.10 | | | | |
| Epon 828³ | | 5.23 | 3.06 | 1.08 | 1.25 |
| Epoxy-functional Polyester | 7.20 | | | | |
| ChemMod 67⁴ | | 1.51 | 1.51 | 1.48 | |
| Epotec RD 107⁵ | | | | | 1.50 |
| Silquest A-187⁶ | 0.32 | 0.14 | 0.16 | 0.15 | 0.15 |
| Aerosil R202⁷ | 0.61 | 0.61 | 0.61 | 0.59 | 0.58 |
| NYAD M200⁸ | 3.10 | 5.99 | 3.03 | 5.95 | 5.87 |
| Jeffamine EDR-148-Epon 863 Adduct | 7.05 | | | | |
| Jeffamine THF-100⁹ | | 2.21 | 2.40 | 2.05 | 2.46 |
| PACM¹⁰ | | 2.21 | 2.40 | 2.05 | 2.15 |
| Ancamide 260A¹¹ | | 2.21 | 2.40 | 2.05 | 1.54 |
| Ancamine K54¹² | 0.36 | | | | |
| DMAPA¹³ | | 0.17 | 0.18 | 0.15 | 0.15 |
| 10 mil Spacer Beads | 0.61 | 0.61 | 0.61 | 0.59 | 0.58 |
| Total | 32.50 | 30.00 | 29.98 | 29.68 | 29.59 |

| **Adhesive Performance** | | | | | |
|---|---|---|---|---|---|
| Lap Shear Strength [MPa] | 9.2 ± 0.4 | 12.5 ± 1.1 | 14.7 ± 0.7 | 14.6 ± 0.4 | 15.1 ± 0.3 |
| Lap Shear Displacement [mm] | 0.7 ± 0.1 | 3.8 ± 1.4 | 7.3 ± 1.4 | 11.1 ± 1.8 | 12.3 ± 1.0 |
| Wedge Impact Peel Resistance, -40 °C [N/mm] | 1.0 ± 0.4 | 4.5 ± 1.0 | 6.6 ± 2.2 | 12.3 ± 1.0 | 19.2 ± 0.6 |
| ¹ Blend of bisphenol A epoxy resin and ~100 nm diameter core-shell polybutadiene rubber available from Kaneka Corporation | | | | | |
| ² Blend of bisphenol F epoxy resin and ~100 nm diameter core-shell polybutadiene rubber available from Kaneka Corporation | | | | | |
| ³ Bisphenol A epoxy resin available from Hexion | | | | | |
| ⁴ 1,4-butandiol diglycidyl ether available from Cargill | | | | | |
| ⁵ 1,6-hexanediol diglycidyl ether available from Aditya Birla | | | | | |
| ⁶ *Gamma*-glycidoxypropyltrimethoxysilane available from Momentive | | | | | |
| ⁷ Hydrophobic fumed silica available from Evonik | | | | | |
| ⁸ Wollastonite (Median particle size: 20 x 100 µm) available from Imerys | | | | | |
| ⁹ Amine-terminated poly(tetramethylene ether glycol)-poly(propylene glycol) copolymer with MW ≤1500 available from Huntsman | | | | | |
| ¹⁰ 4,4'-Diaminodicyclohexylmethane available from Sigma-Aldrich | | | | | |
| ¹¹ Fatty-acid amidoamine curing agent available from Evonik | | | | | |
| ¹² 2,4,6-tris(N,N-dimethylaminomethyl)phenol available from Evonik | | | | | |
| ¹³ Dimethylaminopropylamine available from Sigma-Aldrich | | | | | |

The results demonstrate that the presented combination of aliphatic amine, an amidoamine, flexibilizing amine, and accelerator facilitates lap shear and low temperature wedge impact performance on oiled-contaminated surfaces when combined with elastomeric particles and epoxy-containing compounds. These results show further optimization of the material performance by optimizing the ratio of the aliphatic amine, amidoamine, and flexibilizing amine, composition V.

| **Table II.** Compositions **VI-IX** | | | | |
|---|---|---|---|---|
| Components | **VI** | **VII** | **VIII** | **IX** |
| Kane Ace MX-153 | 13.35 | 13.07 | 12.91 | 14.48 |
| Epon 828 | 1.05 | 0.9 | 1.01 | 1.15 |
| ChemMod 67 | 1.46 | 1.43 | 1.41 | 1.58 |
| Silquest A-187 | 0.15 | 0.14 | 0.14 | 0.16 |
| Aerosil R202 | 0.58 | 0.56 | 0.56 | 0.63 |
| NYAD M200 | | 5.73 | 5.66 | 6.36 |
| Jeffamine THF-100 | 2.46 | 2.48 | 2.48 | 1.61 |
| PACM | 2.17 | 2.17 | 2.17 | 2.41 |
| Ancamide 260A | 1.54 | 1.55 | 1.55 | 1.34 |
| DMAPA | 0.15 | | | 0.45 |
| Ancamine K54 | | 0.15 | | |
| 10 mil Spacer Beads | 0.58 | 0.56 | 0.56 | 0.63 |
| Total | 23.45 | 28.60 | 28.45 | 30.78 |

| **Adhesive Performance** | | | | |
|---|---|---|---|---|
| Lap Shear Strength [MPa] | 14.4 ± 0.4 | 12.5 ± 0.3 | 11.2 ± 0.3 | 15.2 ± 0.1 |
| Lap Shear Displacement [mm] | 9.7 ± 1.3 | 5.3 ± 0.7 | 3.0 ± 1.3 | 12.0 ± 0.3 |
| Wedge Impact Peel Resistance, -40 °C [N/mm] | 8.2 ± 3.1 | 4.8 ± 1.0 | 3.1 ± 2.2 | 4.8 ± 2.8 |

The results demonstrate that removal of the filler (Composition VI) slightly reduces the wedge impact performance and increases variability, but still maintained sufficient lap shear strength and low temperature wedge impact peel resistance. The results also show that changing the accelerator type, composition VII, can slightly reduce both lap shear and wedge impact performance, whereas removal of the accelerator entirely, composition VIII, greatly reduces both performance properties. Further altering the ratios of the aliphatic amine, amidoamine, and flexibilizing amine in composition IX from composition IV further demonstrates the ability to achieve both lap shear and low temperature wedge impact performance properties.

| **Table III.** Compositions **X-XIV** | | | | | |
|---|---|---|---|---|---|
| Components | **X** | **XI** | **XII** | **XIII** | **XIV** |
| Kane Ace MX-153 | 13.37 | 14.59 | 14.59 | 12.91 | 14.50 |
| Epon 828 | 1.05 | | 0.20 | 1.01 | 1.14 |
| ChemMod 67 | 1.46 | 1.59 | 1.59 | 1.41 | 1.58 |
| Silquest A-187 | 0.15 | 0.16 | 0.16 | 0.14 | 0.16 |
| Aerosil R202 | 0.58 | 0.63 | 0.63 | 0.56 | 0.63 |
| NYAD M200 | 5.87 | 6.40 | 6.40 | 5.66 | 6.36 |
| Jeffamine THF-100 | 2.46 | | | | |
| Jeffamine ED-900¹ | | 2.44 | | | |
| Priamine 1075² | | | 2.20 | | |
| Ancamide 910³ | | | | 2.32 | |
| Ancamine 1922A⁴ | | | | | 1.72 |
| PACM | 2.15 | 2.14 | 1.93 | 2.03 | 1.51 |
| Ancamide 260A | 1.54 | 1.53 | 1.38 | 1.45 | 1.08 |
| DMAPA | 0.15 | 0.15 | 0.15 | 0.15 | 0.15 |
| 10 mil Spacer Beads | 0.58 | 0.63 | 0.63 | 0.56 | 0.63 |
| Total | 29.35 | 30.25 | 29.85 | 28.20 | 29.45 |

| **Adhesive Performance** | | | | | |
|---|---|---|---|---|---|
| Lap Shear Strength [MPa] | 14.7 ± 0.1 | 13.9 ± 0.2 | 14.3 ± 1.1 | 14.2 ± 0.3 | 15.1 ± 0.2 |
| Lap Shear Displacement [mm] | 12.3 ± 0.5 | 9.1 ± 0.6 | 11.2 ± 3.2 | 8.8 ± 1.3 | 12.0 ± 0.8 |
| Wedge Impact Peel Resistance, -40 °C [N/mm] | 16.4 ± 3.4 | 2.8 ± 0.8 | 9.6 ± 2.8 | 4.5 ± 0.8 | 8.6 ± 1.5 |
| ¹ Amine-terminated poly(ethylene glycol)-poly(propylene glycol) copolymer available from Huntsman | | | | | |
| ² Fatty acid dimer diamine available from Croda Smart Materials | | | | | |
| ³ Amidoamine comprising etherdiamine available from Evonik | | | | | |
| ⁴ Bis(aminopropyl)diethylene glycol available from Evonik | | | | | |

The results demonstrate that various flexibilizing amines provide sufficient lap shear strength and low temperature wedge impact peel resistance, but the use of a flexibilizing amine comprising poly(tetramethylene glycol)-units (Composition X) yields higher wedge impact performance than other polyetheramines of similar molecular weight.

| **Table IV.** Compositions **XV-XX** | | | | | |
|---|---|---|---|---|---|
| Components | **XV** | **XVI** | **XVII** | **XIX** | **XX** |
| Kane Ace MX-153 | 12.76 | 13.37 | 13.37 | 13.98 | 13.07 |
| Epon 828 | 1.00 | 0.6 | 2.20 | 2.60 | 2.10 |
| ChemMod 67 | 1.39 | 1.46 | 1.46 | 1.53 | 1.43 |
| Silquest A-187 | 0.14 | 0.15 | 0.15 | 0.15 | 0.14 |
| Aerosil R202 | 0.55 | 0.58 | 0.58 | 0.60 | 0.56 |
| NYAD M200 | 5.60 | 5.87 | 5.87 | 6.13 | 5.73 |
| Jeffamine THF-100 | 2.48 | 2.52 | 2.00 | 2.00 | 2.00 |
| DMDC¹ | 2.17 | | | | |
| MPDM² | | 2.21 | | | |
| MXDA³ | | | 1.75 | | |
| MCDA⁴ | | | | 1.75 | |
| 1,3 BAC⁵ | | | | | 1.75 |
| Ancamide 260A¹⁶ | 1.55 | 1.58 | 1.25 | 1.25 | 1.25 |
| DMAPA¹⁷ | 0.15 | 0.15 | 0.15 | 0.15 | 0.15 |
| 10 mil Spacer Beads | 0.55 | 0.58 | 0.58 | 0.6 | 0.56 |
| Total | 28.35 | 29.05 | 29.35 | 30.75 | 28.75 |

| **Adhesive Performance** | | | | | |
|---|---|---|---|---|---|
| Lap Shear Strength [MPa] | 14.8 ± 0.3 | 14.0 ± 0.2 | 14.3 ± 0.5 | 15.1 ± 0.2 | 14.3 ± 0.6 |
| Lap Shear Displacement [mm] | 11.3 ± 1.4 | 9.0 ± 0.7 | 9.6 ± 1.5 | 12.2 ± 1.1 | 9.8 ± 2.6 |
| Wedge Impact Peel Resistance, -40°C [N/mm] | 16.6 ± 0.7 | 18.7 ± 1.0 | 12.1 ± 1.4 | 6.2 ± 2.4 | 11.7 ± 0.8 |
| ¹ 4,4'-methylenebis(2-methylcyclohexyl-amine) available from BASF | | | | | |
| ² 2-methylpentane-1,5-diamine available from Invista | | | | | |
| ³ M-xylylenediamine available from Sigma-Aldrich | | | | | |
| ⁴ Methyl-diaminocyclohexane available from BASF | | | | | |
| ⁵ 1,3-bis(aminomethyl)cyclohexane available from Mitsubishi | | | | | |

The results demonstrate that a variety of aliphatic and cycloaliphatic amines provide a combination of lap shear strength and low temperature wedge impact resistance when used in the appropriate compositions.

| **Table V.** Compositions **XXI-XXV** | | | | | |
|---|---|---|---|---|---|
| Components | **XXI (Rep.)** | **XXII** | **XXIII** | **XXIV** | **XXV** |
| Kane Ace MX-153 | 13.37 | 13.29 | 13.45 | 13.37 | 13.37 |
| Epon 828 | 1.05 | 2.70 | | 1.25 | 1.30 |
| ChemMod 67 | 1.46 | | 3.00 | | |
| Ervsis GE-30¹ | | | | 1.5 | |
| Epodil 748² | | | | | 1.50 |
| Silquest A-187 | 0.15 | 0.15 | 0.15 | 0.15 | 0.15 |
| Aerosil R202 | 0.58 | 0.57 | 0.58 | 0.58 | 0.58 |
| NYAD M200 | 5.87 | 5.83 | 5.90 | 5.87 | 5.87 |
| Jeffamine THF-100 | 2.46 | 2.34 | 2.69 | 2.46 | 2.38 |
| PACM | 2.15 | 2.05 | 2.36 | 2.15 | 2.08 |
| Ancamide 260A | 1.54 | 1.46 | 1.68 | 1.54 | 1.49 |
| DMAPA | 0.15 | 0.14 | 0.16 | 0.15 | 0.15 |
| 10 mil Spacer Beads | 0.58 | 0.58 | 0.58 | 0.58 | 0.58 |
| Total | 29.35 | 29.12 | 30.57 | 29.59 | 29.44 |

| **Adhesive Performance** | | | | | |
|---|---|---|---|---|---|
| Lap Shear Strength [MPa] | 14.7 ± 0.1 | 14.7 ± 0.4 | 14.8 ± 0.4 | 15.3 ± 0.5 | 14.2 ± 0.4 |
| Lap Shear Displacement [mm] | 12.3 ± 0.5 | 11.2 ± 1.6 | 11.1 ± 1.3 | 13.1 ± 2.5 | 9.6 ± 1.2 |
| Wedge Impact Peel Resistance, -40 °C [N/mm] | 16.4 ± 3.4 | 6.8 ± 1.8 | 18.6 ± 3.5 | 13.0 ± 1.7 | 21.8 ± 1.5 |
| ¹ Trimethylolpropane triglycidyl ether available from Huntsman | | | | | |
| ² C12-C14 fatty alcohol monoglycidylether available from Evonik | | | | | |

The results show the influence of the aliphatic epoxy on lap shear performance and low temperature wedge impact resistance. When the composition comprises only aromatic epoxy (Composition XXII) the composition provides sufficient lap shear strength and low temperature wedge impact resistance. Inclusion of a variety of aliphatic epoxies (Compositions XXIII-XXV) provided improved low temperature wedge impact resistance.

## Claims

1. A composition comprising:
a first component comprising an epoxy-containing compound;
a second component comprising an aliphatic amine, an amidoamine, and a flexibilizing amine;
an accelerator; and
elastomeric particles.

2. The composition of claim 1, wherein the second component comprises:
(a) the flexibilizing amine in an amount of at least 15 percent by weight based on total weight of the flexibilizing amine, the aliphatic amine and the amidoamine, such as at least 25 percent by weight, such as no more than 75 percent by weight, such as no more than 65 percent by weight, such as no more than 60 percent by weight, such as 15 percent by weight to 75 percent by weight, such as 25 percent by weight to 65 percent by weight, such as 25 percent by weight to 60 percent by weight;
(b) the aliphatic amine in an amount of at least 5 percent by weight based on total weight of the flexibilizing amine, the aliphatic amine and the amidoamine, such as at least 10 percent by weight, such as at least 15 percent by weight, such as no more than 50 percent by weight, such as no more than 45 percent by weight, such as no more than 40 percent by weight, such as 5 percent by weight to 50 percent by weight, such as 10 percent by weight to 45 percent by weight, such as 15 percent by weight to 40 percent by weight; and/or
(c) the amidoamine in an amount of at least 5 percent by weight based on total weight of the flexibilizing amine, the aliphatic amine and the amidoamine, such as at least 10 percent by weight, such as at least 15 percent by weight, such as no more than 75 percent by weight, such as no more than 50 percent by weight, such as no more than 40 percent by weight, such as 5 percent by weight to 75 percent by weight, such as 10 percent by weight to 50 percent by weight, such as 15 percent by weight to 40 percent by weight, and/or
wherein the aliphatic amine comprises a molecular weight of at least 60 g/mol measured by mass spectrometry, such as at least 80 g/mol, such as at least 110 g/mol, such as no more than 295 g/mol, such as no more than 260 g/mol, such as no more than 250g/mol, such as 60 g/mol to 295 g/mol, such as 80 g/mol to 260 g/mol, such as 110 g/mol to 250 g/mol; and/or
wherein the aliphatic amine comprises a cycloaliphatic amine, a linear or branched aliphatic amine containing no cyclic groups, an araliphatic amine, and/or an amine comprising ethyleneimine subunit; and/or
wherein the aliphatic amine comprises 4,4'-methylenebis(cyclohexylamine), 4,4'-methylenebis(2-methylcyclohexylamine), 1,3-bis(aminomethyl)cyclohexane, or isophorone diamine; and/or
wherein the amidoamine comprises a reaction product of reactants comprising an acid-functional compound, such as a fatty acid, a dimerized fatty acid, a trimerized fatty acid, an acid-functional polymer such as a polyester, and/or an acid-functional small molecule, and a polyamine; and/or
wherein the amidoamine comprises a reaction product of reactants comprising a fatty acid, a dimerized fatty acid and/or a trimerized fatty acid and a polyamine and/or an amine comprising ethyleneimine subunits; and/or
wherein the flexibilizing amine comprises an etheramine comprising a molecular weight of greater than 140 g/mol measured by mass spectrometry, such as at least 170 g/mol, such as at least 210 g/mol, such as no more than 2,000 g/mol, such as no more than 1,700 g/mol, such as no more than 1,300 g/mol, such as no more than 1,200 g/mol, such as greater than 140 g/mol to 2,000 g/mol, such as 170 g/mol to 1,700 g/mol, such as 210 g/mol to 1,300 g/mol, such as 210 g/mol to 1,200 g/mol; and/or
wherein the flexibilizing amine comprises a fatty acid dimer or a fatty acid trimer comprising a molecular weight of greater than 295 g/mol measured by mass spectrometry, such as at least 400 g/mol, such as at least 500 g/mol, such as no more than 2,000 g/mol, such as no more than 1,700 g/mol, such as no more than 1,300 g/mol, such as no more than 1,200 g/mol, such as greater than 295 g/mol to 2,000 g/mol, such as 400 g/mol to 1,700 g/mol, such as 500 g/mol to 1,300 g/mol, such as 500 g/mol to 1,200 g/mol; and/or
wherein the flexibilizing amine comprises an amine-terminated poly(tetramethylene glycol)-poly(propylene glycol) copolymer, an amine-terminated poly(tetramethylene glycol), an amine terminated poly(ethylene glycol), an amine-terminated poly(propylene glycol), a dimer fatty acid diamine, and/or a trimer fatty acid diamine.

3. The composition of claim 1 or claim 2, wherein the epoxy-containing compound comprises more than one epoxy functional group, such as at least two epoxy functional groups, and/or comprises an aromatic epoxide and/or an epoxy adduct; and/or
wherein the epoxy-containing compound comprises bisphenol A diglycidyl ether, bisphenol F diglycidyl ether, a novolac resin, tetraglycidyl methylene dianiline, triglycidyl-p-amino phenol, tetraglycidyl m-xylylenediamine or combinations thereof; and/or
wherein the first component comprises an aromatic monoepoxide, an aliphatic monoepoxide and/or an aliphatic polyepoxide,
wherein the first component preferably comprises the aromatic monoepoxide, the aliphatic monoepoxide and/or the aliphatic polyepoxide in an amount of at least 0.1 percent by weight based on total weight of the first component, such as at least 0.2 percent by weight, such as at least 0.5 percent by weight, such as no more than 30 percent by weight, such as no more than 25 percent by weight, such as no more than 20 percent by weight, such as 0.1 percent by weight to 30 percent by weight, such as 0.2 percent by weight to 25 percent by weight, such as 0.5 percent by weight to 20 percent by weight; and/or
wherein the aliphatic epoxide preferably comprises 1,4-butanediol diglycidyl ether, 1,6-hexanediol diglycidyl ether, neopentyl glycol diglycidyl ether, cyclohexanedimethanol diglycidyl ether, trimethylolpropane triglycidyl ether, trimethylolethane triglycidyl ether, or a fatty alcohol monoglycidyl ether; and/or
wherein the first component comprises the epoxy-containing compound in an amount of at least 30 percent by weight based on total weight of the first component, such as at least 35 percent by weight, such as at least 40 percent by weight, such as no more than 100 percent by weight, such as no more than 60 percent by weight, such as no more than 55 percent by weight, such as no more than 50 percent by weight, such as 30 percent by weight to 100 percent by weight, such as 30 percent by weight to 60 percent by weight, such as 35 percent by weight to 55 percent by weight, such as 40 percent by weight to 50 percent by weight.

4. The composition of any of the preceding claims, wherein the accelerator comprises a primary amine, a secondary amine, a tertiary amine, a phenol, a guanidine, and/or a guanidine derivative; and/or
wherein the composition comprises the accelerator in an amount of at least 0.1 percent by weight based on total weight of the composition, such as at least 0.2 percent by weight, such as at least 0.5 percent by weight, such as no more than 10 percent by weight, such as no more than 5 percent by weight, such as no more than 2.5 percent by weight, such as 0.1 percent by weight to 10 percent by weight, such as 0.2 percent by weight to 5 percent by weight, such as 0.5 percent by weight to 2.5 percent by weight; and/or
wherein the second component and/or a third component comprise the accelerator; and/or
wherein the elastomeric particles comprise a core-shell structure; and/or
wherein the first component, the second component and/or a third component comprise the elastomeric particles; and/or
wherein the elastomeric particles are phase-separated from the epoxy-containing component, the aliphatic amine, the amidoamine and/or the flexibilizing amine; and/or
wherein the elastomeric particles comprise a particle size of at least 20 nm measured by transmission electron microscopy, such as at least 30 nm, such as at least 40 nm, such as at least 50 nm, such as no more than 400 nm, such as no more than 300 nm, such as no more than 200 nm, such as no more than 150 nm, such as 20 nm to 400 nm, such as 30 nm to 300 nm, such as 40 nm to 200 nm, such as 50 nm to 150 nm; and/or
wherein the composition comprises the elastomeric particles in an amount of at least 2.5 percent by weight based on total weight of the composition, such as at least 5 percent by weight, such as at least 7.5 percent by weight, such as no more than 25 percent by weight, such as no more than 22.5 percent by weight, such as no more than 20 percent by weight, such as 2.5 percent by weight to 25 percent by weight, such as 5 percent by weight to 22.5 percent by weight, such as 7.5 percent by weight to 20 percent by weight.

5. The composition of any of the preceding claims, wherein the first component, the second component, and/or a third component comprise a reinforcing filler and/or an additive,
wherein the reinforcing filler preferably comprises wollastonite, ceramic fibers, carbon fibers, iron oxide, talc, mica, or combinations thereof; and/or
wherein preferably:
(a) the composition comprises the reinforcing filler in an amount of at least 2.5 percent by weight based on total weight of the composition, such as at least 5 percent by weight, such as no more than 30 percent by weight, such as no more than 25 percent by weight, such as no more than 20 percent by weight, such as 2.5 percent by weight to 30 percent by weight, such as 2.5 percent by weight to 25 percent by weight, such as 5 percent by weight to 20 percent by weight; and/or
(b) the composition comprises the additive in an amount of at least 0.01 percent by weight based on total weight of the composition, such as at least 0.05 percent by weight, such as no more than 15 percent by weight, such as no more than 12 percent by weight, such as no more than 10 percent by weight, such as no more than 3 percent by weight, such as 0.01 percent by weight to 15 percent by weight, such as 0.01 percent by weight to 12 percent by weight, such as 0.05 percent by weight to 10 percent by weight, such as 0.05 percent by weight to 3 percent by weight.

6. The composition of any of the preceding claims, wherein the composition is substantially free, or essentially free, or completely free, of a polyurethane resin; and/or
wherein the composition is formulated as an adhesive composition, such as a structural adhesive composition, a pottant composition, a gap filler composition, a pre-preg composition, a liquid shim composition, or combinations thereof; and/or
comprising an amine-hydrogen:epoxy equivalence of at least 0.75:1, such as at least 0.9:1, such as no more than 1.25:1, such as no more than 1.1:1, such as 0.75:1 to 1.25:1, such as 0.9:1 to 1.1:1; and/or comprising:
(a) the first component in an amount of at least 50 percent by weight based on total weight of the composition, such as at least 60 percent by weight, such as at least 70 percent by weight, such as no more than 90 percent by weight, such as no more than 85 percent by weight, such as no more than 80 percent by weight, such as 50 percent by weight to 90 percent by weight, such as 60 percent by weight to 85 percent by weight, such as 70 percent by weight to 80 percent by weight; and/or
(b) the second component in an amount of at least 10 percent by weight based on total weight of the composition, such as at least 15 percent by weight, such as at least 20 percent by weight, such as no more than 50 percent by weight, such as no more than 40 percent by weight, such as no more than 30 percent by weight, such as 10 percent by weight to 50 percent by weight, such as 15 percent by weight to 40 percent by weight, such as 20 percent by weight to 30 percent by weight.

7. A substrate comprising a coating formed from the composition of any of claims 1 to 6 on a portion of a surface of the substrate.

8. The substrate of claim 7, wherein the substrate comprises stainless steel or an alloy thereof; and/or
wherein the surface is partially covered with an oil; and/or
wherein the surface comprises an outer body of a vehicle; and/or
wherein the coating comprises an adhesive, a structural adhesive, a pottant, a gap filler, a composite formed from a pre-preg, a liquid shim, or combinations thereof.

9. An article, comprising:
the substrate of any of claims 7 to 8; and
a second substrate;
wherein the coating is located between the substrate and the second substrate.

10. The article of claim 7, wherein the coating comprises (a) a lap shear strength of at least 12 MPa measured according to ASTM D1002-10 using HDG substrate of 0.8 mm thickness dip coated with a 10% by weight solution of Multidraw KTL N 16 Oil in heptane measured using an INSTRON 5567 machine in tensile mode with a pull rate of 10 mm per minute, and (b) a wedge impact peel resistance at -40°C of at least 2.0 N/mm tested according to ISO 11343 Dynamic Resistance to Cleavage testing using HDG substrate of 0.8 mm thickness dip coated with a 10% by weight solution of Multidraw KTL N 16 Oil in heptane measured using an INSTRON CEAST 9350 drop tower model at an impact speed of 2 m/sec, with samples being conditioned at -40°C for at least 30 minutes prior to testing; and/or
wherein the article comprises a vehicle, a part or combinations thereof,
wherein the vehicle preferably comprises an aircraft or a land vehicle.

11. A method of coating a substrate comprising contacting a portion of a surface of the substrate with the composition of any of claims 1 to 6 optionally further comprising mixing the first component and the second component of any of claims 1 to 6; and exposing the composition to ambient conditions for at least 30 minutes; and optionally, further comprising exposing the composition to a temperature of at least 120°C, such as at least 130°C, such as at least 135°C, such as at least 140°C, such as for at least 30 seconds, such as at least 1 minute, such as at least 2 minutes; wherein the exposing optionally comprises the use of an electromagnetic activation source; and/or
contacting a surface of a second substrate to the composition such that the composition is located between the substrate and the second substrate.

12. A method of forming an article, comprising extruding the composition of any of claims 1 to 6.

13. The method of claim 12, wherein the extruding comprises three-dimensional printing; and/or
further comprising, before extruding, mixing the first component and the second component; and/or
wherein the extruding comprises applying successive layers to build the article.

14. The article formed by the method of any of claims 12 to 13.

15. Use of the composition according to any one of claims 1 to 6 for coating a surface of a substrate, wherein the coating comprises (a) a lap shear strength of at least 12 MPa measured according to ASTM D1002-10 using HDG substrate of 0.8 mm thickness dip coated with a 10% by weight solution of Multidraw KTL N 16 Oil in heptane measured using an INSTRON 5567 machine in tensile mode with a pull rate of 10 mm per minute, and (b) a wedge impact peel resistance at -40°C of at least 2.0 N/mm tested according to ISO 11343 Dynamic Resistance to Cleavage testing using HDG substrate of 0.8 mm thickness dip coated with a 10% by weight solution of Multidraw KTL N 16 Oil in heptane measured using an INSTRON CEAST 9350 drop tower model at an impact speed of 2 m/sec, with samples being conditioned at -40°C for at least 30 minutes prior to testing.

## Patentansprüche

1. Eine Zusammensetzung umfassend:
eine erste Komponente umfassend eine epoxyhaltige Verbindung;
eine zweite Komponente umfassend ein aliphatisches Amin, ein Amidoamin und ein flexibilisierendes Amin;
einen Beschleuniger; und
Elastomerteilchen.

2. Die Zusammensetzung gemäß Anspruch 1, wobei die zweite Komponente umfasst:
(a) das flexibilisierende Amin in einer Menge von mindestens 15 Gew.-%, bezogen auf das Gesamtgewicht des flexibilisierenden Amins, des aliphatischen Amins und des Amidoamins, wie beispielsweise mindestens 25 Gew.-%, wie beispielsweise nicht mehr als 75 Gew.-%, wie beispielsweise nicht mehr als 65 Gew.-%, wie beispielsweise nicht mehr als 60 Gew.-%, wie beispielsweise 15 Gew.-% bis 75 Gew:-%, wie beispielsweise 25 Gew.-% bis 65 Gew.-%, wie beispielsweise 25 Gew.-% bis 60 Gew.-%;
(b) das aliphatische Amin in einer Menge von mindestens 5 Gew.-%, bezogen auf das Gesamtgewicht des flexibilisierenden Amins, des aliphatischen Amins und des Amidoamins, wie beispielsweise mindestens 10 Gew.-%, wie beispielsweise mindestens 15 Gew.-%, wie beispielsweise nicht mehr als 50 Gew.-%, wie beispielsweise nicht mehr als 45 Gew.-%, wie beispielsweise nicht mehr als 40 Gew.-%, wie beispielsweise 5 Gew.-% bis 50 Gew.-%, wie beispielsweise 10 Gew.-% bis 45 Gew.-%, wie beispielsweise 15 Gew.-% bis 40 Gew.-%; und/oder
(c) das Amidoamin in einer Menge von mindestens 5 Gew.-%, bezogen auf das Gesamtgewicht des flexibilisierenden Amins, des aliphatischen Amins und des Amidoamins, wie beispielsweise mindestens 10 Gew.-%, wie beispielsweise mindestens 15 Gew.-%, wie beispielsweise nicht mehr als 75 Gew.-%, wie beispielsweise nicht mehr als 50 Gew.-%, wie beispielsweise nicht mehr als 40 Gew.-%, wie beispielsweise 5 Gew.-% bis 75 Gew.-%, wie beispielsweise 10 Gew.-% bis 50 Gew.-%, wie beispielsweise 15 Gew.-% bis 40 Gew.-%, und/oder
wobei das aliphatische Amin ein Molekulargewicht von mindestens 60 g/mol, bestimmt durch Massenspektrometrie umfasst, wie beispielsweise mindestens 80 g/mol, wie beispielsweise mindestens 110 g/mol, wie beispielsweise nicht mehr als 295 g/mol, wie beispielsweise nicht mehr als 260 g/mol, wie beispielsweise nicht mehr als 250 g/mol, wie beispielsweise 60 g/mol bis 295 g/mol, wie beispielsweise 80 g/mol bis 260 g/mol, wie beispielsweise 110 g/mol bis 250 g/mol; und/oder
wobei das aliphatische Amin ein cycloaliphatisches Amin, ein lineares oder verzweigtes aliphatisches Amin enthaltend keine cyclischen Gruppen, ein araliphatisches Amin und/oder ein Amin umfassend eine Ethyleniminuntereinheit umfasst; und/oder
wobei das aliphatische Amin 4,4'-Methylenbis(cyclohexylamin), 4,4'-Methylenbis(2-methylcyclohexylamin), 1,3-Bis(aminomethyl)cyclohexan oder Isophorondiamin umfasst; und/oder
wobei das Amidoamin ein Reaktionsprodukt von Reaktanten umfassend eine säurefunktionelle Verbindung, wie beispielsweise eine Fettsäure, eine dimerisierte Fettsäure, eine trimerisierte Fettsäure, ein säurefunktionelles Polymer, wie beispielsweise einen Polyester, und/oder ein säurefunktionelles kleines Molekül, und ein Polyamin umfasst; und/oder
wobei das Amidoamin ein Reaktionsprodukt von Reaktanten umfassend eine Fettsäure, eine dimerisierte Fettsäure und/oder eine trimerisierte Fettsäure und ein Polyamin und/oder ein Amin umfassend Ethyleniminuntereinheiten umfasst; und/oder
wobei das flexibilisierende Amin ein Etheramin umfassend ein Molekulargewicht von mehr als 140 g/mol, bestimmt gemäß Massenspektrometrie, umfasst, wie beispielsweise mindestens 170 g/mol, wie beispielsweise mindestens 210 g/mol, wie beispielsweise nicht mehr als 2.000 g/mol, wie beispielsweise nicht mehr als 1.700 g/mol, wie beispielsweise nicht mehr als 1.300 g/mol, wie beispielsweise nicht mehr als 1.200 g/mol, wie beispielsweise mehr als 140 g/mol bis 2.000 g/mol, wie beispielsweise 170 g/mol bis 1.700 g/mol, wie beispielsweise 210 g/mol bis 1.300 g/mol, wie beispielsweise 210 g/mol bis 1.200 g/mol; und/oder
wobei das flexibilisierende Amin ein Fettsäuredimer oder ein Fettsäuretrimer umfassend ein Molekulargewicht von mehr als 295 g/mol, bestimmt mittels Massenspektrometrie, wie beispielsweise mindestens 400 g/mol, wie beispielsweise mindestens 500 g/mol, wie beispielsweise nicht mehr als 2.000 g/mol, wie beispielsweise nicht mehr als 1.700 g/mol, wie beispielsweise nicht mehr als 1.300 g/mol, wie beispielsweise nicht mehr als 1.200 g/mol, wie beispielsweise mehr als 295 g/mol bis 2.000 g/mol, wie beispielsweise 400 g/mol bis 1.700 g/mol, wie beispielsweise 500 g/mol bis 1.300 g/mol, wie beispielsweise 500 g/mol bis 1.200 g/mol umfasst; und/oder
wobei das flexibilisierende Amin ein aminterminiertes Poly(tetra-methylenglykol)-Poly(propylenglykol)-Copolymer, ein aminterminiertes Poly(tetramethylenglykol), ein aminterminiertes Poly(ethylenglykol), ein aminterminiertes Poly(propylenglykol), ein Diamin einer dimeren Fettsäure und/oder ein Diamin einer trimeren Fettsäure umfasst.

3. Die Zusammensetzung gemäß Anspruch 1 oder 2, wobei die epoxyhaltige Verbindung mehr als eine epoxyfunktionelle Gruppe umfasst, wie beispielsweise mindestens zwei epoxyfunktionelle Gruppen und/oder ein aromatisches Epoxid und/oder Epoxyaddukt umfasst; und/oder wobei die epoxyhaltige Verbindung Bisphenol-A-diglycidylether, Bisphenyl-F-diglycidylether, ein Novolak-Harz, Tetraglycidylmethylendianilin, Triglycidyl-p-aminophenol, Tetraglycidyl-m-xylylendiamin oder Kombinationen derselben umfasst; und/oder
wobei die erste Komponente ein aromatisches Monoepoxid, ein aliphatisches Monoepoxid und/oder ein aliphatisches Polyepoxid umfasst,
wobei die erste Komponente vorzugsweise das aromatische Monoepoxid, das aliphatische Monoepoxid und/oder das aliphatische Polyepoxid in einer Menge von mindestens 0,1 Gew.-%, bezogen auf das Gesamtgewicht der ersten Komponente, umfasst, wie beispielsweise mindestens 0,2 Gew.-%, wie beispielsweise mindestens 0,5 Gew.-%, wie beispielsweise nicht mehr als 30 Gew.-%, wie beispielsweise nicht mehr als 25 Gew.-%, wie beispielsweise nicht mehr als 20 Gew.-%, wie beispielsweise 0,1 Gew.-% bis 30 Gew.-%, wie beispielsweise 0,2 Gew.-% bis 25 Gew.-%, wie beispielsweise 0,5 Gew.-% bis 20 Gew.-%; und/oder
wobei das aliphatische Epoxid vorzugsweise 1,4-Butandioldiglycidylether, 1,6-Hexandioldiglycidylether, Neopentylglykoldiglycidylether, Cyclohexandimethanoldiglycidylether, Trimethylolpropantriglycidylether, Trimethylolethantriglycidylether oder einen Fettsäurealkoholmonoglycidylether umfasst; und/oder
wobei die erste Komponente die epoxyhaltige Verbindung in einer Menge von mindestens 30 Gew.-%, bezogen auf das Gesamtgewicht der ersten Komponente umfasst, wie beispielsweise mindestens 35 Gew.-%, wie beispielsweise mindestens 40 Gew.-%, wie beispielsweise nicht mehr als 100 Gew.-%, wie beispielsweise nicht mehr als 60 Gew.-%, wie beispielsweise nicht mehr als 55 Gew.-%, wie beispielsweise nicht mehr als 50 Gew.-%, wie beispielsweise 30 Gew.-% bis 100 Gew.-%, wie beispielsweise 30 Gew.-% bis 60 Gew.-%, wie beispielsweise 35 Gew.-% bis 55 Gew.-%, wie beispielsweise 40 Gew.-% bis 50 Gew.-%.

4. Die Zusammensetzung gemäß irgendeinem der vorhergehenden Ansprüche, wobei der Beschleuniger ein primäres Amin, ein sekundäres Amin, ein tertiäres Amin, ein Phenol, ein Guanidin und/oder ein Guanidin-Derivat umfasst; und/oder
wobei die Zusammensetzung den Beschleuniger in einer Menge von mindestens 0,1 Gew.-%, bezogen auf das Gesamtgewicht der Zusammensetzung umfasst, wie beispielsweise mindestens 0,2 Gew.-%, wie beispielsweise mindestens 0,5 Gew.-%, wie beispielsweise nicht mehr als 10 Gew.-%, wie beispielsweise nicht mehr als 5 Gew.-%, wie beispielsweise nicht mehr als 2,5 Gew.-%, wie beispielsweise 0,1 Gew.-% bis 10 Gew.-%, wie beispielsweise 0,2 Gew.-% bis 5 Gew.-%, wie beispielsweise 0,5 Gew.-% bis 2,5 Gew.-%; und/oder
wobei die zweite Komponente und/oder eine dritte Komponente den Beschleuniger umfasst; und/oder
wobei die Elastomerteilchen eine Kern-Schale-Struktur umfassen; und/oder wobei die erste Komponente, die zweite Komponente und/oder eine dritte Komponente die elastomeren Teilchen umfassen; und/oder
wobei die elastomeren Teilchen phasensepariert von der epoxyhaltigen Verbindung, dem aliphatischen Amin, dem Amidoamin und/oder dem flexibilisierenden Amin vorliegen; und/oder
wobei die elastomeren Teilchen eine Teilchengröße von mindestens 20 nm, bestimmt gemäß Transmissionselektronenmikroskopie, wie beispielsweise mindestens 30 nm, wie beispielsweise mindestens 40 nm, wie beispielsweise mindestens 50 nm, wie beispielsweise nicht mehr als 400 nm, wie beispielsweise nicht mehr als 300 nm, wie beispielsweise nicht mehr als 200 nm, wie beispielsweise nicht mehr als 150 nm, wie beispielsweise 20 nm bis 400 nm, wie beispielsweise 30 nm bis 300 nm, wie beispielsweise 40 nm bis 200 nm, wie beispielsweise 50 nm bis 150 nm umfassen; und/oder
wobei die Zusammensetzung die Elastomerteilchen in einer Menge von mindestens 2,5 Gew.-%, bezogen auf das Gesamtgewicht der Zusammensetzung, umfasst, wie beispielsweise mindestens 5 Gew.-%, wie beispielsweise mindestens 7,5 Gew.-%, wie beispielsweise nicht mehr als 25 Gew.-%, wie beispielsweise nicht mehr als 22,5 Gew.-%, wie beispielsweise nicht mehr als 20 Gew.-%, wie beispielsweise 2,5 Gew.-% bis 25 Gew.-%, wie beispielsweise 5 Gew.-% bis 22,5 Gew.-%, wie beispielsweise 7,5 Gew.-% bis 20 Gew.-%.

5. Die Zusammensetzung gemäß irgendeinem der vorhergehenden Ansprüche, wobei die erste Komponente, die zweite Komponente und/oder eine dritte Komponente einen verstärkenden Füllstoff und/oder ein Additiv umfassen,
wobei der verstärkende Füllstoff vorzugsweise Wollastonit, keramische Fasern, Kohlenstofffasern, Eisenoxid, Talk, Glimmer oder Kombinationen derselben umfasst; und/oder
wobei vorzugsweise
(a) die Zusammensetzung den verstärkenden Füllstoff in einer Menge von mindestens 2,5 Gew.-%, bezogen auf das Gesamtgewicht der Zusammensetzung, umfasst, wie beispielsweise mindestens 5 Gew.-%, wie beispielsweise nicht mehr als 30 Gew.-%, wie beispielsweise nicht mehr als 25 Gew.-%, wie beispielsweise nicht mehr als 20 Gew.-%, wie beispielsweise 2,5 Gew.-% bis 30 Gew.-%, wie beispielsweise 2,5 Gew.-% bis 25 Gew.-%, wie beispielsweise 5 Gew.-% bis 20 Gew.-%; und/oder
(b) die Zusammensetzung das Additiv in einer Menge von mindestens 0,01 Gew.-%, bezogen auf das Gesamtgewicht der Zusammensetzung umfasst, wie beispielsweise 0,05 Gew.-%, wie beispielsweise nicht mehr als 15 Gew.-%, wie beispielsweise nicht mehr als 12 Gew.-%, wie beispielsweise nicht mehr als 10 Gew.-%, wie beispielsweise nicht mehr als 3 Gew.-%, wie beispielsweise 0,01 Gew.-% bis 15 Gew.-%, wie beispielsweise 0,01 Gew.-% bis 12 Gew.-%, wie beispielsweise 0,05 Gew.-% bis 10 Gew.-%, wie beispielsweise 0,05 Gew.-% bis 3 Gew.-%.

6. Die Zusammensetzung gemäß irgendeinem der vorhergehenden Ansprüche, wobei die Zusammensetzung im Wesentlichen frei oder weitgehend frei oder vollständig frei von einem Polyurethanharz ist; und/oder
wobei die Zusammensetzung als eine Haftmittelzusammensetzung, wie beispielsweise eine strukturelle Haftmittelzusammensetzung, eine Vergussmassenzusammensetzung, eine Fugenfüllzusammensetzung, eine Prepregzusammensetzung, eine flüssige Ausgleichszusammensetzung oder Kombinationen derselben formuliert ist; und/oder
umfassend eine Amin-Wasserstoff:Epoxy-Äquivalenz von mindestens 0,75:1, wie beispielsweise mindestens 0,9:1, wie beispielsweise nicht mehr als 1,25:1, wie beispielsweise nicht mehr als 1,1:1, wie beispielsweise 0,75:1 bis 1,25:1, wie beispielsweise 0,9:1 bis 1,1:1; und/oder
umfassend:
(a) die erste Komponente in einer Menge von mindestens 50 Gew.-%, bezogen auf das Gesamtgewicht der Zusammensetzung, wie beispielsweise mindestens 60 Gew.-%, wie beispielsweise mindestens 70 Gew.-%, wie beispielsweise nicht mehr als 90 Gew.-%, wie beispielsweise nicht mehr als 85 Gew.-%, wie beispielsweise nicht mehr als 80 Gew.-%, wie beispielsweise 50 Gew.-% bis 90 Gew.-%, wie beispielsweise 60 Gew.-% bis 85 Gew.-%, wie beispielsweise 70 Gew.-% bis 80 Gew.-%; und/oder
(b) die zweite Komponente in einer Menge von mindestens 10 Gew.-%, bezogen auf das Gesamtgewicht der Zusammensetzung, wie beispielsweise mindestens 15 Gew.-%, wie beispielsweise mindestens 20 Gew.-%, wie beispielsweise nicht mehr als 50 Gew.-%, wie beispielsweise nicht mehr als 40 Gew.-%, wie beispielsweise nicht mehr als 30 Gew.-%, wie beispielsweise 10 Gew.-% bis 50 Gew.-%, wie beispielsweise 15 Gew.-% bis 40 Gew.-%, wie beispielsweise 20 Gew.-% bis 30 Gew.-%.

7. Ein Substrat umfassend eine Beschichtung gebildet aus der Zusammensetzung gemäß irgendeinem der Ansprüche 1 bis 6 auf einem Teil einer Oberfläche des Substrats.

8. Das Substrat gemäß Anspruch 7, wobei das Substrat Edelstahl oder eine Legierung davon umfasst; und/oder
wobei die Oberfläche teilweise mit einem Öl bedeckt ist; und/oder
wobei die Oberfläche einen Außenkörper eines Fahrzeugs umfasst; und/oder
wobei die Beschichtungszusammensetzung eine Haftmittelzusammensetzung, eine strukturelle Haftmittelzusammensetzung, eine Vergussmassenzusammensetzung, eine Fugenfüllzusammensetzung, eine Prepregzusammensetzung, eine flüssige Ausgleichszusammensetzung oder Kombinationen derselben umfasst.

9. Ein Gegenstand umfassend:
das Substrat gemäß irgendeinem der Ansprüche 7 bis 8; und
ein zweites Substrat;
wobei sich die Beschichtung zwischen dem Substrat und dem zweiten Substrat befindet.

10. Der Gegenstand gemäß Anspruch 7, wobei die Beschichtung (a) eine Zugscherfestigkeit von mindestens 12 MPa, gemessen gemäß ASTM D1002-10 unter Verwendung von HDG-Substrat von 0,8 mm Dicke, tauchbeschichtet mit einer 10 gew.-%igen Lösung von Multidraw KTL N 16 Öl in Heptan, gemessen mit einer Instron 5567 Maschine im Zugmodus mit einer Zuggeschwindigkeit von 10 mm pro Minute und (b) eine Keilschlag-Schälfestigkeit bei -40 °C von mindestens 2,0 N/mm, geprüft gemäß ISO 11343 Bestimmung des dynamischen Keilschlagwiderstands unter Verwendung von HDG-Substrat von 0,8 mm Dicke, tauchbeschichtet mit einer 10 gew.-%igen Lösung von Multidraw KTL N 16 Öl in Heptan, gemessen unter Verwendung eines Instron Ceast 9350 Fallturmmodells bei einer Aufprallgeschwindigkeit von 2 m/s, wobei die Proben bei -40 °C für mindestens 30 Minuten vor dem Test konditioniert wurden, umfasst; und/oder
wobei der Gegenstand ein Fahrzeug, ein Teil oder Kombinationen derselben umfasst,
wobei das Fahrzeug vorzugsweise ein Luftfahrzeug oder ein Landfahrzeug umfasst.

11. Ein Verfahren zum Beschichten eines Substrats umfassend ein In-Kontakt-Bringen eines Teils einer Oberfläche des Substrats mit der Zusammensetzung gemäß irgendeinem der Ansprüche 1 bis 6, wahlweise des Weiteren umfassend ein Mischen der ersten Komponente und der zweiten Komponente gemäß irgendeinem der Ansprüche 1 bis 6; und ein Aussetzen der Zusammensetzung gegenüber Umgebungsbedingungen für mindestens 30 Minuten; und wahlweise des Weiteren umfassend ein Aussetzen der Zusammensetzung gegenüber einer Temperatur von mindestens 120 °C, wie beispielsweise mindestens 130 °C, wie beispielsweise mindestens 135 °C, wie beispielsweise mindestens 140 °C, wie beispielsweise für mindestens 30 Sekunden, wie beispielsweise für mindestens 1 Minute, wie beispielsweise für mindestens 2 Minuten; wobei das Aussetzen wahlweise die Verwendung einer elektromagnetischen Aktivierungsquelle umfasst; und/oder
In-Kontakt-Bringen einer Oberfläche eines zweiten Substrats mit der Zusammensetzung in einer solchen Weise, dass sich die Zusammensetzung zwischen dem Substrat und dem zweiten Substrat befindet.

12. Ein Verfahren zur Herstellung eines Gegenstands umfassend ein Extrudieren der Zusammensetzung gemäß irgendeinem der Ansprüche 1 bis 6.

13. Das Verfahren gemäß Anspruch 12, wobei das Extrudieren dreidimensionales Drucken umfasst; und/oder
des Weiteren umfassend, vor dem Extrudieren, ein Mischen der ersten Komponente und der zweiten Komponente; und/oder
wobei das Extrudieren ein Aufbringen aufeinanderfolgender Schichten zum Aufbau des Gegenstands umfasst.

14. Der Gegenstand hergestellt durch das Verfahren gemäß irgendeinem der Ansprüche 12 bis 13.

15. Verwendung der Zusammensetzung gemäß irgendeinem der Ansprüche 1 bis 6 zur Beschichtung einer Oberfläche eines Substrats, wobei die Beschichtung (a) eine Zugscherfestigkeit von mindestens 12 MPa, gemessen gemäß ASTM D1002-10 unter Verwendung von HDG-Substrat von 0,8 mm Dicke, tauchbeschichtet mit einer 10 gew.-%igen Lösung von Multidraw KTL N 16 Öl in Heptan, gemessen mit einer Instron 5567 Maschine im Zugmodus mit einer Zuggeschwindigkeit von 10 mm pro Minute und (b) eine Keilschlag-Schälfestigkeit bei -40 °C von mindestens 2,0 N/mm, geprüft gemäß ISO 11343 Bestimmung des dynamischen Keilschlagwiderstands unter Verwendung von HDG-Substrat von 0,8 mm Dicke, tauchbeschichtet mit einer 10 gew.-%igen Lösung von Multidraw KTL N 16 Öl in Heptan, gemessen unter Verwendung eines Instron Ceast 9350 Fallturmmodells bei einer Aufprallgeschwindigkeit von 2 m/s, wobei die Proben bei -40 °C für mindestens 30 Minuten vor dem Test konditioniert wurden, umfasst.

## Revendications

1. Composition comprenant :
- un premier composant comprenant un composé comportant un groupe époxy,
- un deuxième composant comprenant une amine aliphatique, une amido-amine, et une amine de flexibilisation,
- un accélérateur,
- et des particules élastomériques.

2. Composition conforme à la revendication 1, dans laquelle le deuxième composant comprend :
a) l'amine de flexibilisation en une proportion d'au moins 15 pour cent, en poids rapporté au poids total de l'amine de flexibilisation, de l'amine aliphatique et de l'amido-amine, comme au moins 25 pour cent en poids, mais pas plus de 75 pour cent en poids, comme pas plus de 65 pour cent en poids, comme pas plus de 60 pour cent en poids, comme de 15 pour cent en poids à 75 pour cent en poids, comme de 25 pour cent en poids à 65 pour cent en poids, comme de 25 pour cent en poids à 60 pour cent en poids,
b) l'amine aliphatique en une proportion d'au moins 5 pour cent, en poids rapporté au poids total de l'amine de flexibilisation, de l'amine aliphatique et de l'amido-amine, comme au moins 10 pour cent en poids, comme au moins 15 pour cent en poids, mais pas plus de 50 pour cent en poids, comme pas plus de 45 pour cent en poids, comme pas plus de 40 pour cent en poids, comme de 5 pour cent en poids à 50 pour cent en poids, comme de 10 pour cent en poids à 45 pour cent en poids, comme de 15 pour cent en poids à 40 pour cent en poids,
c) et/ou l'amido-amine en une proportion d'au moins 5 pour cent, en poids rapporté au poids total de l'amine de flexibilisation, de l'amine aliphatique et de l'amido-amine, comme au moins 10 pour cent en poids, comme au moins 15 pour cent en poids, mais pas plus de 75 pour cent en poids, comme pas plus de 50 pour cent en poids, comme pas plus de 40 pour cent en poids, comme de 5 pour cent en poids à 75 pour cent en poids, comme de 10 pour cent en poids à 50 pour cent en poids, comme de 15 pour cent en poids à 40 pour cent en poids,
et/ou dans laquelle l'amine aliphatique présente une masse molaire, mesurée par spectrométrie de masse, d'au moins 60 g/mol, comme au moins 80 g/mol, comme au moins 110 g/mol, mais pas plus de 295 g/mol, comme pas plus de 260 g/mol, comme pas plus de 250 g/mol, comme de 60 g/mol à 295 g/mol, comme de 80 g/mol à 260 g/mol, comme de 110 g/mol à 250 g/mol,
et/ou dans laquelle l'amine aliphatique comprend une amine cyclo-aliphatique, une amine aliphatique linéaire ou ramifiée ne comportant pas de groupes cycliques, une amine araliphatique, et/ou une amine comportant un motif de type éthylène-imine,
et/ou dans laquelle l'amine aliphatique comprend de la 4,4'-méthylène-bis(cyclohexylamine), de la 4,4'-méthylène-bis(2-méthyl-cyclohexyl-amine), du 1,3-bis(amino-méthyl)-cyclohexane, ou de l'isophorone-diamine,
et/ou dans laquelle l'amido-amine comprend un produit de réaction de réactifs comprenant un composé à groupe(s) fonctionnel(s) acide(s), comme un acide gras, un dimère d'acide gras, un trimère d'acide gras, un polymère à groupes fonctionnels acides, tel un polyester, et/ou une petite molécule à groupe(s) fonctionnels acide(s), et une polyamine, et/ou dans laquelle l'amido-amine comprend un produit de réaction de réactifs comprenant un acide gras, un dimère d'acide gras et/ou un trimère d'acide gras, et une polyamine et/ou une amine comportant des motifs de type éthylène-imine,
et/ou dans laquelle l'amine de flexibilisation comprend une éther-amine qui présente une masse molaire, mesurée par spectrométrie de masse, de plus de 140 g/mol, comme au moins 170 g/mol, comme au moins 210 g/mol, mais pas plus de 2000 g/mol, comme pas plus de 1700 g/mol, comme pas plus de 1300 g/mol, comme pas plus de 1200 g/mol, comme de plus de 140 g/mol à 2000 g/mol, comme de 170 g/mol à 1700 g/mol, comme de 210 g/mol à 1300 g/mol, comme de 210 g/mol à 1200 g/mol,
et/ou dans laquelle l'amine de flexibilisation comprend un dimère d'acide gras ou un trimère d'acide gras présentant une masse molaire, mesurée par spectrométrie de masse, de plus de 295 g/mol, comme au moins 400 g/mol, comme au moins 500 g/mol, mais pas plus de 2000 g/mol, comme pas plus de 1700 g/mol, comme pas plus de 1300 g/mol, comme pas plus de 1200 g/mol, comme de plus de 295 g/mol à 2000 g/mol, comme de 400 g/mol à 1700 g/mol, comme de 500 g/mol à 1300 g/mol, comme de 500 g/mol à 1200 g/mol,
et/ou dans laquelle l'amine de flexibilisation comprend un copolymère poly(tétraméthylèneglycol)-poly(propylèneglycol) à groupes terminaux amine, un poly(éthylèneglycol) à groupes terminaux amine, un poly(pro-pylèneglycol) à groupes terminaux amine, un diamino-dimère d'acide gras et/ou un diamino-trimère d'acide gras.

3. Composition conforme à la revendication 1 ou 2, dans laquelle le composé comportant un groupe époxy comporte plus d'un groupe fonctionnel époxy, comme au moins deux groupes fonctionnels époxy, et/ou comprend un époxyde aromatique et/ou un adduit d'époxyde, et/ou dans laquelle le composé comportant un groupe époxy comprend de l'éther diglycidylique de bisphénol A, de l'éther diglycidylique de bisphénol F, une résine novolaque, de la tétraglycidyl-méthylène-di-aniline, du triglycidyl-para-amino-phénol, de la tétraglycidyl-méta-xylylène-diamine ou des combinaisons de ces composés,
et/ou dans laquelle le premier composant comprend un monoépoxyde aromatique, un monoépoxyde aliphatique et/ou un polyépoxyde aliphatique,
étant entendu que le premier composant comprend de préférence le monoépoxyde aromatique, le monoépoxyde aliphatique et/ou le polyépoxyde aliphatique en une proportion d'au moins 0,1 pour cent, en poids rapporté au poids total du premier composant, comme au moins 0,2 pour cent en poids, comme au moins 0,5 pour cent en poids, mais pas plus de 30 pour cent en poids, comme pas plus de 25 pour cent en poids, comme pas plus de 20 pour cent en poids, comme de 0,1 pour cent en poids à 30 pour cent en poids, comme de 0,2 pour cent en poids à 25 pour cent en poids, comme de 0,5 pour cent en poids à 20 pour cent en poids,
et/ou étant entendu que l'époxyde aliphatique comprend de préférence de l'éther diglycidylique de butane-1,4-diol, de l'éther diglycidylique d'hexane-1,6-diol, de l'éther diglycidylique de néopentyl-glycol, de l'éther diglycidylique de cyclohexane-diméthanol, de l'éther triglycidylique de de triméthylol-propane, de l'éther triglycidylique de triméthylol-éthane, ou un éther monoglycidylique d'alcool gras,
et/ou dans laquelle le premier composant comprend le composé comportant un groupe époxy en une proportion d'au moins 30 pour cent, en poids rapporté au poids total du premier composant, comme au moins 35 pour cent en poids, comme au moins 40 pour cent en poids, mais pas plus de 100 pour cent en poids, comme pas plus de 60 pour cent en poids, comme pas plus de 55 pour cent en poids, comme pas plus de 50 pour cent en poids, comme de 30 pour cent en poids à 100 pour cent en poids, comme de 30 pour cent en poids à 60 pour cent en poids, comme de 35 pour cent en poids à 55 pour cent en poids, comme de 40 pour cent en poids à 50 pour cent en poids.

4. Composition conforme à l'une des revendications précédentes, dans laquelle l'accélérateur comprend une amine primaire, une amine secondaire, une amine tertiaire, un phénol, une guanidine, et/ou un dérivé de guanidine,
et/ou laquelle composition comprend l'accélérateur en une proportion d'au moins 0,1 pour cent, en poids rapporté au poids total de la composition, comme au moins 0,2 pour cent en poids, comme au moins 0,5 pour cent en poids, mais pas plus de 10 pour cent en poids, comme pas plus de 5 pour cent en poids, comme pas plus de 2,5 pour cent en poids, comme de 0,1 pour cent en poids à 10 pour cent en poids, comme de 0,2 pour cent en poids à 5 pour cent en poids, comme de 0,5 pour cent en poids à 2,5 pour cent en poids,
et/ou dans laquelle le deuxième composant et/ou un troisième composant comprend ou comprennent l'accélérateur,
et/ou dans laquelle les particules élastomériques présentent une structure de type noyau-coque,
et/ou dans laquelle le premier composant, le deuxième composant et/ou un troisième composant comprend ou comprennent les particules élastomériques,
et/ou dans laquelle les particules élastomériques forment une phase séparée au sein du composant contenant les groupes époxy, de l'amine aliphatique, de l'amido-amine et/ou de l'amine de flexibilisation, et/ou dans laquelle les particules élastomériques présentent une taille de particules, mesurée par microscopie électronique en transmission, d'au moins 20 nm, comme au moins 30 nm, comme au moins 40 nm, comme au moins 50 nm, mais pas plus de 400 nm, comme pas plus de 300 nm, comme pas plus de 200 nm, comme pas plus de 150 nm, comme de 20 nm à 400 nm, comme de 30 nm à 300 nm, comme de 40 nm à 200 nm, comme de 50 nm à 150 nm,
et/ou laquelle composition comprend les particules élastomériques en une proportion d'au moins 2,5 pour cent, en poids rapporté au poids total de la composition, comme au moins 5 pour cent en poids, comme au moins 7,5 pour cent en poids, mais pas plus de 25 pour cent en poids, comme pas plus de 22,5 pour cent en poids, comme pas plus de 20 pour cent en poids, comme de 2,5 pour cent en poids à 25 pour cent en poids, comme de 5 pour cent en poids à 22,5 pour cent en poids, comme de 7,5 pour cent en poids à 20 pour cent en poids.

5. Composition conforme à l'une des revendications précédentes, dans laquelle le premier composant, le deuxième composant et/ou un troisième composant comprend ou comprennent une charge de renfort et/ou un adjuvant,
dans laquelle la charge de renfort comprend de préférence de la wollastonite, des fibres de céramique, des fibres de carbone, de l'oxyde de fer, du talc, du mica, ou une combinaison de ces corps, et/ou étant entendu que, de préférence :
a) la composition comprend la charge de renfort en une proportion d'au moins 2,5 pour cent, en poids rapporté au poids total de la composition, comme au moins 5 pour cent en poids, mais pas plus de 30 pour cent en poids, comme pas plus de 25 pour cent en poids, comme pas plus de 20 pour cent en poids, comme de 2,5 pour cent en poids à 30 pour cent en poids, comme de 2,5 pour cent en poids à 25 pour cent en poids, comme de 5 pour cent en poids à 20 pour cent en poids,
b) et/ou la composition comprend l'adjuvant en une proportion d'au moins 0,01 pour cent, en poids rapporté au poids total de la composition, comme au moins 0,05 pour cent en poids, mais pas plus de 15 pour cent en poids, comme pas plus de 12 pour cent en poids, comme pas plus de 10 pour cent en poids, comme pas plus de 3 pour cent en poids, comme de 0,01 pour cent en poids à 15 pour cent en poids, comme de 0,01 pour cent en poids à 12 pour cent en poids, comme de 0,05 pour cent en poids à 10 pour cent en poids, comme de 0,05 pour cent en poids à 3 pour cent en poids.

6. Composition conforme à l'une des revendications précédentes, laquelle composition ne contient pratiquement pas, ou absolument pas, de résine de polyuréthane ou n'en contient pas du tout,
et/ou laquelle composition est formulée en une composition d'adhésif, comme une composition d'adhésif structural, une composition d'agent d'enrobage, une composition d'agent de colmatage, une composition pour pré-imprégné, une composition liquide de calage, ou une combinaison de telles compositions,
et/ou présente un rapport d'équivalents (hydrogène d'amine)/époxy d'au moins 0,75/1, comme au moins 0,9/1, mais pas plus de 1,25/1, comme pas plus de 1,1/1, comme de 0,75/1 à 1,25/1, comme de 0,9/1 à 1,1/1,
et/ou comprend
a) le premier composant en une proportion d'au moins 50 pour cent, en poids rapporté au poids total de la composition, comme au moins 60 pour cent en poids, comme au moins 70 pour cent en poids, mais pas plus de 90 pour cent en poids, comme pas plus de 85 pour cent en poids, comme pas plus de 80 pour cent en poids, comme de 50 pour cent en poids à 90 pour cent en poids, comme de 60 pour cent en poids à 85 pour cent en poids, comme de 70 pour cent en poids à 80 pour cent en poids,
b) et/ou le deuxième composant en une proportion d'au moins 10 pour cent, en poids rapporté au poids total de la composition, comme au moins 15 pour cent en poids, comme au moins 20 pour cent en poids, mais pas plus de 50 pour cent en poids, comme pas plus de 40 pour cent en poids, comme pas plus de 30 pour cent en poids, comme de 10 pour cent en poids à 50 pour cent en poids, comme de 15 pour cent en poids à 40 pour cent en poids, comme de 20 pour cent en poids à 30 pour cent en poids.

7. Substrat comprenant un revêtement formé à partir d'une composition conforme à l'une des revendications 1 à 6 sur une partie d'une surface du substrat.

8. Substrat conforme à la revendication 7, lequel substrat comprend un acier inoxydable ou un alliage d'acier,
et/ou dans lequel la surface est en partie couverte d'une huile,
et/ou dans lequel la surface comprend un corps externe d'un véhicule, et/ou dans lequel le revêtement comprend un adhésif, un adhésif structural, un agent d'enrobage, un agent de colmatage, un composite formé à partir d'un pré-imprégné, un agent liquide de calage, ou une combinaison de tels agents.

9. Article comprenant :
- un substrat conforme à l'une des revendications 7 et 8,
- et un deuxième substrat,
et dans lequel le revêtement est situé entre le substrat et le deuxième substrat.

10. Article conforme à la revendication 7, dans lequel le revêtement présente
a) une résistance au cisaillement en recouvrement d'au moins 12 MPa, mesurée selon la norme ASTM D1002-10 sur un substrat HDG de 0,8 mm d'épaisseur, revêtu par trempage dans une solution à 10 % en poids de Multidraw KTL N 16 Oil dans de l'heptane, au moyen d'une machine INSTRON 5567 utilisée en mode traction avec une vitesse de traction de 10 mm par minute,
b) et une résistance au pelage sous l'impact d'un coin à -40 °C d'au moins 2,0 N/mm, mesurée selon la norme ISO 11343 « Test de résistance dynamique au clivage » sur un substrat HDG de 0,8 mm d'épaisseur, revêtu par trempage dans une solution à 10 % en poids de Multidraw KTL N 16 Oil dans de l'heptane, au moyen d'une tour de chute INSTRON CEAST, modèle 9350, utilisée avec une vitesse d'impact de 2 m/s, les échantillons étant conditionnés à -40 °C pendant au moins 30 minutes avant le test,
et/ou lequel article comprend un véhicule, une pièce ou des combinaisons de cela,
étant entendu que le véhicule englobe de préférence un aéronef ou un véhicule terrestre.

11. Procédé de revêtement d'un substrat, comportant le fait de mettre une partie d'une surface de ce substrat en contact avec une composition conforme à l'une des revendications 1 à 6, et en outre, en option, le fait de mélanger un premier composant et un deuxième composant définis dans l'une des revendications 1 à 6, puis le fait d'exposer la composition aux conditions ambiantes pendant au moins 30 minutes, et en outre, en option, le fait d'exposer la composition à une température d'au moins 120 °C, comme au moins 130 °C, comme au moins 135 °C, comme au moins 140 °C, pendant au moins 30 secondes, comme au moins 1 minute, comme au moins 2 minutes, cette exposition comprenant, en option, l'utilisation d'une source électromagnétique d'activation,
et/ou le fait d'amener une surface d'un deuxième substrat au contact de la composition, de telle sorte que la composition se trouve placée entre le substrat et le deuxième substrat.

12. Procédé de fabrication d'un article, comportant l'extrusion d'une composition conforme à l'une des revendications 1 à 6.

13. Procédé conforme à la revendication 12, dans lequel l'extrusion comprend une impression tridimensionnelle,
et/ou comprenant en outre, avant l'extrusion, le fait de mélanger le premier composant et le deuxième composant,
et/ou dans lequel l'extrusion comporte le fait d'appliquer des couches successives pour édifier l'article.

14. Article formé par un procédé conforme à l'une des revendications 12 à 13.

15. Utilisation d'une composition conforme à l'une des revendications 1 à 6 pour revêtir une surface d'un substrat, le revêtement obtenu présentant :
a) une résistance au cisaillement en recouvrement d'au moins 12 MPa, mesurée selon la norme ASTM D1002-10 sur un substrat HDG de 0,8 mm d'épaisseur, revêtu par trempage dans une solution à 10 % en poids de Multidraw KTL N 16 Oil dans de l'heptane, au moyen d'une machine INSTRON 5567 utilisée en mode traction avec une vitesse de traction de 10 mm par minute,
b) et une résistance au pelage sous l'impact d'un coin à -40 °C d'au moins 2,0 N/mm, mesurée selon la norme ISO 11343 « Test de résistance dynamique au clivage » sur un substrat HDG de 0,8 mm d'épaisseur, revêtu par trempage dans une solution à 10 % en poids de Multidraw KTL N 16 Oil dans de l'heptane, au moyen d'une tour de chute INSTRON CEAST, modèle 9350, utilisée avec une vitesse d'impact de 2 m/s, les échantillons étant conditionnés à -40 °C pendant au moins 30 minutes avant le test.
